# EUROPÄISCHE PATENTSCHRIFT

(11) **EP 2 054 718 B1**
(45) Veröffentlichungstag und Bekanntmachung des Hinweises auf die Patenterteilung: **10.10.2012**
(21) Anmeldenummer: 06764329.6
(22) Anmeldetag: 14.08.2006
(51) Int. Cl.: G01N 29/11, G01N 29/34, G01N 29/38, B23K 11/25, B23K 31/12

(54) **Verfahren zur Online-Ultraschallprüfung eines mittels elektrischem Widerstandsschweissen erzeugten Schweisspunkts**
Method for online ultrasound testing of a weld point produced using electrical resistance welding
Procédé de contrôle en ligne par ultrasons d'un point de soudure produit au moyen du soudage par résistance électrique

(43) Veröffentlichungstag der Anmeldung: 06.05.2009
(73) Patentinhaber: GE Inspection Technologies GmbH, 50354 Hürth (DE)
(72) Erfinder: ROYE, Werner, 50374 Ertstadt (DE)
(74) Vertreter: Vorberg, Jens
(86) Internationale Anmeldenummer: PCT/EP2006/065296
(87) Internationale Veröffentlichungsnummer: WO 2008/019708

(56) Entgegenhaltungen:
- EP-A- 1 462 204
- EP-A- 1 537 937
- EP-A1- 0 284 177
- WO-A-01/11353
- DE-A1- 4 325 858
- DE-A1- 10 312 459
- CRECRAFT D I ET AL: "ULTRASONIC EVALUATION OF ELECTRICAL RESISTANCE SPOT WELDS" NON-DESTRUCTIVE TESTING, ELSEVIER, Bd. 2, Nr. 1, Februar 1969 (1969-02), Seiten 40-43, XP009060513 ISSN: 0029-1021

## Beschreibung

Gegenstand der vorliegenden Erfindung ist ein Verfahren zur Onlineprüfung eines mittels elektrischem Widerstandsschweißen erzeugten Schweißpunkts zwischen zwei beschichteten Blechen mittels Ultraschall sowie eine Vorrichtung zur Onlineprüfung eines mittels elektrischem Widerstandsschweißen erzeugten Schweißpunkts zwischen zwei beschichteten Blechen, wobei die Vorrichtung insbesondere zur Ausführung des erfindungsgemäßen Verfahrens geeignet ist.

Eine in der technischen Anwendung häufig verwendete Methode zum Verbinden von elektrisch leitfähigen Blechen besteht in der Erzeugung eines die plan aufeinander liegenden Bleche verbindenden Schweißpunkts mittels elektrischem Widerstandschweißen. Hierzu werden auf die zu verschweißenden Bleche oberseitig und unterseitig Elektroden aufgesetzt und diese mit einem hohen Schweißstrom beaufschlagt. Der Schweißstrom fließt über die zwischen den Elektroden angeordneten Bleche und erhitzt diese lokal. Bei geeigneter Verfahrensführung schmelzen die aufeinander liegenden Bleche in ihrem Kontaktbereich lokal auf, wobei sich eine Schweißlinse aus flüssigem Blechmaterial ausbildet. Hat diese Schweißlinse eine ausreichende Größe erreicht, wird der Schweißstrom abgeschaltet und die flüssige Schweißlinse erstarrt. Die erstarrte Schweißlinse ist bei erfolgreicher Verfahrensführung fest mit dem Materialgefüge beider zu verschweißender Bleche verbunden und stellt somit eine hochbelastbare mechanische Verbindung zwischen den Blechen dar.

Entsprechende Verfahren werden seit langer Zeit als Standardverfahren bei der Karosserieherstellung im Fahrzeugbau verwendet. Problematisch ist jedoch bis zum heutigen Tage die Prüfung solcher mittels elektrischem Widerstandsschweißen erzeugter Schweißpunkte bereits während ihrer Erzeugung. Trotz vielfältiger Entwicklungsanstrengungen ist es bis zum heutigen Tage nicht gelungen, im Rahmen der Großserienfertigung solcher Schweißpunkte zuverlässig einsetzbare Verfahren zu entwickeln, die eine Qualitätskontrolle von Schweißpunkten bereits während ihrer Erstellung erlauben würden.

Anstelle einer solchen grundsätzlich wünschenswerten und im Folgenden als "Onlineprüfung" bezeichneten Prüfung der erzeugten Schweißpunkte während ihrer Erstellung wird bis zum heutigen Tage auf Offlineprüfverfahren zurückgegriffen, bei denen aus einer Vielzahl erzeugter Schweißpunkte zufällig einzelne Schweißpunkte herausgegriffen werden und einer Festigkeitsprüfung unterzogen werden. Beispielsweise aus der DE 102 305 87 desselben Anmelders sind eine Vielzahl von aus dem Stand der Technik bekannten und bis zum heutigen Tage gebräuchlichen Offlineprüfverfahren für mittels elektrischem Widerstandsschweißen erzeugte Schweißpunkte bekannt.

Wie der DE 102 205 87 ebenfalls zu entnehmen ist, stellt sich insbesondere im modernen Fahrzeugbau ein weiteres Problem bei der Erzeugung von Schweißpunkten ein, da bei der Karosserieherstellung zur Erhöhung der Korrosionsbeständigkeit in zunehmendem Maße auf beschichtete Stahlbleche zurückgegriffen wird. Eine weitere Verbreitung gefunden hat die Verwendung von Zink-beschichteten Stahlblechen, bei denen eine wenig Mikrometer dicke Zinkschicht galvanisch oder mittels Feuerverzinkung beidseitig auf Stahlbleche aufgebracht wird. Bei der Erzeugung von Schweißpunkten zwischen zwei dergestalt beschichteten Stahlblechen mittels elektrischem Widerstandsschweißen tritt nunmehr aufgrund der unterschiedlichen Schmelzpunkte des Stahlblechs und der Zinkbeschichtung das Phänomen auf, dass beispielsweise bei fehlerhafter Verfahrensführung des Schweißvorgangs nur die aufeinander liegenden Zinkschichten der miteinander zu verschweißenden Stahlbleche aufschmelzen und sich eine nur aus Zink bestehende Schweißlinse zwischen den Stahlblechen ausbildet. Wird der Schweißstrom in einem solchen Zeitpunkt abgestellt, so verfestigt sich die aus Zink bestehende Schweißlinse, so dass sich eine mechanische Verbindung zwischen den aufeinander liegenden verzinkten Stahlblechen über die erstarrte Zinkschweißlinse ergibt. Eine innige Materialverbindung zwischen den Stahlblechen selbst, die bei der Schweißpunkterstellung angestrebt wird, hat jedoch nicht stattgefunden. Dennoch weist der erstellte Schweißpunkt eine gewisse mechanische Belastbarkeit auf, da auch die erstarrte Zinkschweißlinse eine - wenn auch nur schwach belastbare - mechanische Verbindung zwischen den zu verbindenden beschichteten Stahlblechen darstellt. Das Auffinden eines solchen oftmals als "Zinkkleber" bezeichneten Schweißpunktes stellt eine besondere Herausforderung für die aus dem Stand der Technik bekannten Offlineprüfverfahren dar, da Ultraschallverfahren in der Regel nicht in der Lage sind, sicher zwischen einer Zinkschweißlinse und einer Stahlschweißlinse zu unterscheiden. Hier verbleibt oftmals nur eine zerstörende Prüfung des Schweißpunkts.

Das Problem der Onlineprüfung solcher mittels elektrischen Widerstandschweißen zwischen beschichteten Blechen erzeugter Schweißpunkte ist bis zum heutigen Tage ebenfalls praktisch nur unzureichend gelöst.

Der EP 0 284 177 A1 ist eine Vorrichtung für das elektrische Widerstandschweißen sowie ein Verfahren zum elektrischem Widerstandsschweißen zu entnehmen, welches prinzipiell auf einer Onlineprüfung des sich in der Erstellung befindlichen Schweißpunktes basiert. Es basiert auf der Durchschallung des Schweißpunkts während seiner Erzeugung mit einer Folge von Ultraschallpulsen. Hierzu sind in den Elektrodenkappen der vorgeschlagenen Schweißvorrichtung ein Ultraschallsendewandler sowie ein Ultraschallempfangswandler angeordnet. Die vom Ultraschallsendewandler ausgesandte schnelle Folge von Ultraschallpulsen wird in die zu verschweißenden Bleche eingekoppelt, durchtritt den Blechbereich, in dem sich die Schweißlinse ausbildet bzw. ausbilden soll und wird über die Elektrodenkappe der zweiten Elektrode in einen Ultraschallempfangswandler eingekoppelt. Zur Online-überprüfung des in der Erstellung befindlichen Schweißpunkts wird die beim Durchtritt durch die aufeinander liegenden Bleche auftretende Laufzeitverzögerung der Ultraschallpulse registriert. Da die Laufzeit eines Ultraschallpulses durch die aufeinander liegenden Bleche von der Schallgeschwindigkeit im Material abhängig ist und die Schallgeschwindigkeit im festen Blech deutlich höher ist als die Schallgeschwindigkeit in der flüssigen Schweißlinse, stellt die registrierte Änderung der Laufzeitverzögerung ein Maß für das Volumen der flüssigen Schweißlinse dar. Auf diese Weise kann beispielsweise ein Endpunkt für das Schweißverfahren bestimmt werden, bei dem aufgrund der gemessenen Laufzeitverzögerung darauf geschlossen werden kann, dass sich eine flüssige Schweißlinse mit ausreichendem Volumen zwischen den zu verbindenden Blechen ausgebildet hat. Wird die vorgegebene Laufzeitverzögerung erreicht, wird der Schweißstrom abgestellt. Das aus der EP 0 284 177 A1 bekannte Verfahren konnte sich nach Kenntnis des Anmelders jedoch noch im praktischen Einsatz nicht durchsetzen, so dass eine Onlineprüfung von mittels elektrischem Widerstandsschweißen erzeugten Schweißpunkten bis zum heutigen Tage im großtechnischen Einsatz nicht durchgeführt wird. Auch lässt sich das Verfahren in der aus der EP 0 284 177 A1 ersichtlichen Form nicht auf die Schweißpunktprüfung bei beschichten Blechen erweitern.

Auch die DE 43 25 858 A1 beschreibt eine Anordnung zur Ultraschalleinbringung bei der Bewertung von Punktschweißverbindungen, bei der die Anordnung des Ultraschallsenders und ggf. -empfängers an der Außenwand des Elektrodenschaftes oder des Elektrodenhalters erfolgt. Dies wird dadurch ermöglicht, dass für die Durchschallung der Schweißlinse keine Longitudinalwellen benutzt werden, sondern Schwerwellen und insbesondere Transversalwellen oder Torsionswellen, die sich in den Elektrodenwandungen ausbreiten.

Aus der DE 103 12 459 A1 ist ein Verfahren ein Verfahren zur Bewertung einer sich während eines Schweißvorganges ausbildenden Schweißverbindung zwischen wenigstens zwei Fügepartnern bekannt. Es basiert auf dem Einsatz wenigstens eines den Bereich der sich ausbildenden Schweißverbindung mit Ultraschallwellen durchschallenden Ultraschallsenders sowie wenigstens eines Ultraschallempfängers, der Schalldurchlässigkeitsänderungen der den Bereich der sich ausbildenden Schweißverbindung durchdringenden Ultraschallwellen zur Beurteilung der Schweißverbindung registriert. Der Bereich der Schweißverbindung wird mit longitudinalen und transversalen Ultraschallwellen durchschallt, wobei die zeitabhängigen Schalldurchlässigkeitsänderungen für die longitudinalen und transversalen Ultraschallschwellen jeweils getrennt voneinander registriert werden. Anhand einer Verhältnisbildung wird einerseits der Zeitpunkt ermittelt, an dem sich im Bereich der Schweißverbindung eine Schmelze ausbildet, andererseits dient die Verhältnisbildung als Grundlage für die Bewertung der Schweißverbindung.

Schließlich bezieht sich auch die EP-A-1 537 937 auf den Bereich der Widerstandsschweißtechnik, u.a. mittels Schweißrobotern, z.B. zur Verwendung beim Rollnahtschweißen, Buckelschweißen, oder Punktschweißen und befasst sich mit der Unterbringung von Komponenten zum Betrieb innerhalb des Schweißzangengehäuses. Diese Schrift beschäftigt sich damit, unter Berücksichtigung der Anforderungen an das Gewicht eine möglichst effektive Raumausnutzung des vom Schweißroboter geführten Schweißzangengehäuses zu erreichen. Das Schweißzangengehäuse erhält dazu ein Modul mit Modulkomponenten, die zur Durchführung des von der Schweißsteuerung überwachten Schweißprozesses relevant sind.

Eine Anwendung der aus den vorgenannten Schriften bekannten Verfahren auf die Schweisspunktprüfung an beschichteten Blechen ist bislang nicht bekannt.

Aufgabe der vorliegenden Erfindung ist es daher, ein Verfahren anzugeben, mittels welchem eine Ultraschallprüfung von mittels elektrischem Widerstandsschweißen erzeugten Schweißpunkten zwischen beschichten Blechen, insbesondere verzinkten Stahlblechen, bereits während ihrer Erstellung möglich ist. Darüber hinaus ist Aufgabe der vorliegenden Erfindung, eine Vorrichtung anzugeben, welche die Onlineprüfung von mittels elektrischem Widerstandsschweißen erzeugten Schweißpunkten bereits während ihrer Erstellung ermöglicht, die zwischen beschichteten Blechen erzeugt werden. Gelöst wird diese Aufgabe durch die Verfahren gemäß der unabhängigen Ansprüche 1 und 5 sowie durch Vorrichtungen gemäß der unabhängigen Ansprüche 6 und 13.

Die erfindungsgemäßen Verfahren erlauben es erstmals, bei der Erzeugung eines Schweißpunkts zwischen zwei beschichteten Blechen mittels elektrischen Widerstandsschweißen die Ausbildung des Schweißpunkts online zu überwachen. Die Erfassung der Transmission bzw. Reflektion des transversal polarisierten Anteils der eingeschallten Ultraschallpulse erlaubt eine zuverlässige und reproduzierbare Beurteilung des erzeugten Schweißpunkts bereits während seiner Erstellung, so dass beispielsweise die Ausbildung eines Zinkklebers mit sehr guter Genauigkeit erkannt und ggf. durch geeignete Anpassung der Schweißparameter verhindert werden kann. Zumindest ist es möglich, die Ausbildung eines Zinkklebers mit guter Sicherheit zu erkennen und diese ggf. durch die Erzeugung eines in der Nähe angeordneten weiteren Schweißpunkts aufzufangen.

Das erfindungsgemäße Verfahren beruht auf der Erkenntnis, dass sich transversal und longitudinal polarisierte Ultraschallpulse in flüssigen Medien unterschiedlich ausbreiten. Ein longitudinal polarisierter Ultraschallpuls, der eine Kompressionswelle darstellt, erfährt beim Übergang von einem festen zu einem flüssigen Medium nur eine Änderung der Schallgeschwindigkeit, was zu Laufzeitverzögerung und - bei schräger Einschallung - zu Brechungseffekten führen kann.

Ein transversal polarisierter Ultraschallpuls hingegen stellt eine Scherwelle dar. Eine Scherwelle breitet sich in einem festen Medium ähnlich aus wie eine Kompressionswelle. Eine Ausbreitung in einem flüssigen Medium hingegen ist im Falle der Scherwelle aufgrund des verschwindenden Schermoduls der Flüssigkeit unmöglich.

Erfasst man nun die Transmission oder die Reflektion des transversal polarisierten Anteils einer Folge von Ultraschallpulsen beim Durchgang durch eine sich ausbildende Schweißlinse, so wird beim Auftreten der flüssigen Schweißlinse die Transmission einen starken Einbruch erfahren und die Reflektion eine sehr starke Zunahme. Die Stärke und Dauer des Transmissionseinbruchs bzw. die Stärke und Dauer der Reflektionszunahme zeigen somit die Ausbildung einer flüssigen Schweißlinse zwischen den zu verbindenden beschichteten Blechen an. Bei geeigneter Verfahrensführung ist es hier insbesondere möglich, das Aufschmelzen der aufeinander liegenden Oberflächenschichten der beschichteten Bleche unter Ausbildung einer ersten Schweißlinse bei niedriger Temperatur, das Verdrängen dieser ersten Schweißlinse aufgrund des Anpressdrucks der Schweißelektroden sowie das Ausbilden einer zweiten Schweißlinse zwischen den miteinander zu verbindenden Blechkernen zeitlich aufgelöst zu erfassen. Dies kann beispielsweise dazu verwendet werden, die Ausbildung eines Zinkklebers zwischen zinkbeschichteten Stahlblechen zu erkennen.

Die erfindungsgemäßen Verfahren Umfassen den schritt , dass die zeitaufgelöste erfasste Änderung der Transmission bzw. Reflektion des transversal polarisierten Anteils der Folge von Ultraschallpulsen durch bzw. am Schweißpunkt dahingehend analysiert wird, ob ein erstes und ein zweites Minimum in der Transmission oder ob eine erste und eine zweite Zunahme in der Reflektion auftreten. Diese Merkmal bietet besondere Vorteile in der erfindungsgemäßen Situation, in der das Material des Blechkerns einen anderen Schmelzpunkt aufweist als das Material der Oberflächenbeschichtung. Ein Beispiel hierfür sind wiederum zinkbeschichtete Stahlbleche. Der Schmelzpunkt von Zink liegt im Bereich von etwa 470 °C, der Schmelzpunkt des Stahlkerns liegt im Bereich von etwa 1.450 °C. Die Analyse gemäß der vorstehend genannten Weiterbildung erlaubt es, das Aufschmelzen des Beschichtungsmaterials und das Aufschmelzen des Kernmaterials deutlich voneinander zu unterscheiden, was vorteilhaft zur Beurteilung der Qualität des erstellten Schweißpunkts herangezogen werden.

Das vorstehende Merkmal lässt sich noch verbessern, wenn bei Auftreten eines zweiten Minimums in der Transmission bzw. eines zweiten Maximums in der Reflektion die zeitliche Dauer des Transmissionsminimums bzw. die zeitliche Dauer des Reflektionsmaximums erfasst werden. Die Dauer von Minimum oder Maximum können - ggf. unter geeigneter Berücksichtigung des anliegenden Schweißstroms sowie weiterer Materialparameter wie der Dicke der zu verschweißenden Bleche - zur Ermittlung der räumlichen Abmessungen der sich ausbildenden Schweißlinse aus dem Kernmaterial der zu verschweißenden Bleche herangezogen werden. Gegebenfalls ist auch die Erfassung der zeitlichen Dauer des ersten Transmissionsminimums bzw. des ersten Reflektionsmaximums vorteilhaft.

Das Verfahren lässt sich nochmals verbessern, wenn neben der Dauer des ersten und zweiten Transmissionsminimums bzw. des ersten und zweiten Reflektionsmaximums auch die Stärke des zweiten Transmissionseinbruchs bzw. der zweiten Reflektionszunahme erfasst wird. So deutet beispielsweise ein geringerer Einbruch der Transmission bzw. eine geringere Erhöhung der Reflektion auf die Ausbildung einer flüssigen Schweißlinse mit verringertem Durchmesser und somit auch verringerter Belastbarkeit hin.

In einer besonders vorteilhaften Weiterbildung des erfindungsgemäßen Verfahrens weisen die erzeugten Ultraschallpulse neben dem transversal polarisierten Anteil auch einen longitudinal polarisierten Anteil auf. Erfindungsgemäß wird nun zusätzlich die Änderung der Laufzeitverzögerung des longitudinal polarisierten Anteils der Folge von Ultraschallpulsen beim Durchgang durch den zu prüfenden Schweißpunkt zeitlich aufgelöst erfasst. Die Änderung der auftretenden Laufzeitverzögerung beim Durchgang durch den in Erzeugung befindlichen Schweißpunkt stellt ebenfalls ein Maß für die Ausdehnung der sich ausbildenden flüssigen Schweißlinse dar und kann somit vorteilhaft ergänzend zur Beurteilung der Qualität des erzeugten Schweißpunktes herangezogen werden.

In einer weiteren vorteilhaften Ausbildung der erfindungsgemäßen Verfahren wird die Erzeugung des zu prüfenden Schweißpunkts durch Anlegen eines Schweißstroms zum Zeitpunkt T₀ eingeleitet und durch Abschalten des Schweißstroms zum Zeitpunkt T_{E} beendet. Besondere Vorteile bei der Durchführung des erfindungsgemäßen Verfahrens ergeben sich, wenn die Erfassung der Änderung der Transmission bzw. Reflektion des transversal polarisierten Anteils der Folge von Ultraschallpulsen durch den bzw. am Schweißpunkt vor dem Zeitpunkt T₀ begonnen wird und über den Zeitpunkt T_{E} hinaus fortgesetzt wird. Wird zusätzlich noch die Änderung der Transmission des longitudinal polarisierten Anteils der Folge von Ultraschallpulsen durch den zu prüfenden Schweißpunkt erfasst, so wird auch hier die Erfassung vorteilhaft vor dem Zeitpunkt T₀ begonnen und über den Zeitpunkt T_{E} hinaus fortgesetzt. Auf diese Weise ist es möglich, das erfasste Ultraschallsignal mit dem Verlauf des Schweißstroms zu korrellieren und hierüber weitere Einblicke in den ablaufenden Schweißvorgang zu gewinnen.

Eine erfindungsgemäße erste Vorrichtung zur Onlineprüfung eines mittels elektrischen Widerstandsschweißen erzeugten Schweißpunkts zwischen zwei beschichteten Blechen weist die folgenden Merkmale auf:
a. Eine erste Schweißelektrode mit einem ersten Elektrodenschaft und einer auswechselbaren ersten Elektrodenkappe,
b. einer zweiten Schweißelektrode mit einem zweiten Elektrodenschaft und einer auswechselbaren zweiten Elektrodenkappe,
c. einen Ultraschallsendewandler, der dazu vorgesehen ist, eine Folge von Ultraschallpulsen abzugeben, welche jeweils einen transversal polarisierten Anteil aufweisen, und
d. einen Ultraschallempfangswandler, der dazu vorgesehen ist, die vom Ultraschallsendewandler abgegebene Folge von Ultraschallpulsen zu empfangen, wobei der Ultraschallsendewandler und der Ultraschallempfangswandler so ausgebildet sind, dass ein vom Ultraschallsendewandler abgegebener Ultraschallpuls über die erste Schweißelektrode durch den zwischen den beschichteten Blechen erzeugten Schweißpunkt hindurch über die zweite Schweißelektrode zum Ultraschallempfangswandler gelangen und von diesem empfangen werden kann,
e. eine Auswerteeinheit, die mit dem Ultraschallsendewandler und dem Ultraschallempfangswandler verbunden ist, wobei die Auswerteeinheit dazu vorgesehen ist, die Änderung der Transmission des transversal polarisierten Anteils der Folge der vom Ultraschallsendewandler erzeugten Ultraschallpulse durch den Schweißpunkt während der Erzeugung des Schweißpunktes zeitaufgelöst zu erfassen.

Eine äquivalente Ausführung der erfindungsgemäßen Vorrichtung weist die folgenden Merkmale auf:
a. Eine erste Schweißelektrode mit einem ersten Elektrodenschaft und einer auswechselbaren ersten Elektrodenkappe,
b. eine zweite Schweißelektrode,
c. einen Ultraschallsendewandler, der dazu vorgesehen ist, eine Folge von Ultraschallpulsen abzugeben, welche ein transversal polarisierten Anteil aufweisen, und einen Ultraschallempfangswandler, der dazu vorgesehen ist, die vom Ultraschallsendewandler abgegebene Folge von Ultraschallpulsen zu empfangen, wobei der Ultraschallsendewandler und der Ultraschallempfangswandler so ausgebildet sind, dass ein vom Ultraschallsendewandler abgegebener Ultraschallpuls über die erste Schweißelektrode zum zwischen den beschichteten Blechen erzeugten Schweißpunkt gelangen und an diesem zumindest teilweise reflektiert werden kann, wobei der reflektierte Anteil nachfolgend über die erste Schweißelektrode zum Ultraschallempfangswandler zurückgelangen und von diesem empfangen werden kann,
d. eine Auswerteeinheit, die mit dem Ultraschallempfangswandler verbunden ist, wobei die Auswerteeinheit dazu vorgesehen ist, die Änderung der Reflektion des transversal polarisierten Anteils der Folge der vom Ultraschallsendewandler erzeugten Ultraschallpulse am Schweißpunkt während der Erzeugung des Schweißpunkts zeitaufgelöst zu erfassen.

Die erfindungsgemäßen Vorrichtungen ermöglichen es, das erfindungsgemäße Verfahren in seinen beiden Ausprägungen durchzuführen, in dem sie eine solche Anordnung von Schweißelektroden, Ultraschallsendewandler und Ultraschallempfangswandler sowie eine geeignete Auswerteeinheit bereitstellen, dass die gezielte Erfassung der Änderung der Transmission des transversal polarisierten Anteils einer Folge von Ultraschallpulsen durch den zu prüfenden Schweißpunkt während seiner Erzeugung oder die zeitaufgelöste Erfassung der Änderung der Reflektion des transversal polarisierten Anteils einer Folge von Ultraschallpulsen am zu prüfenden Schweißpunkt während seiner Erzeugung möglich ist.

Auf besonders einfache Weise lässt sich dies erzielen, wenn der erfindungsgemäß vorgesehene Ultraschallsendewandler so an der ersten Schweißelektrode angeordnet ist, dass ein vom Ultraschallsendewandler erzeugter Ultraschallpuls unmittelbar in die erste Elektrodenkappe eingekoppelt wird. Dies lässt sich beispielsweise realisieren, in dem die erste Elektrodekappe eine plane Innenfläche aufweist, und der Ultraschallsendewandler zur Einkopplung des erzeugten Ultraschallpulses in die erste Elektrodenkappe unmittelbar an der planen Innenfläche angeordnet wird.

Soll die Änderung der Transmission des transversal polarisierten Anteils einer Folge von Ultraschallpulsen durch den zu prüfenden Schweißpunkt während seiner Erzeugung erfasst werden, so ergeben sich besondere Vorteile, wenn der Ultraschallempfangswandler ebenfalls so angeordnet wird, dass ein in die entgegengesetzt angeordnete zweite Elektrodenkappe transmittierter Ultraschallpuls unmittelbar in den Ultraschallempfangswandler ausgekoppelt wird. Dies lässt sich beispielsweise dadurch realisieren, dass die zweite Elektrodenkappe ebenfalls eine plane Innenfläche ausbildet, und der Ultraschallempfangswandler zur Auskopplung des durch den zu prüfenden Schweißpunkt transmittierten Ultraschallpulses aus der zweiten Elektrodenkappe unmittelbar an der planen Innenfläche angeordnet wird. Typische Schallfrequenzen der eingeschallten Ultraschallpulse liegen im Fall der Transmissionsg eometrie im Bereich von 0,1 bis 10 MHz, bevorzugt zwischen 1 und 5 MHz. Bewährt hat sich insbesondere eine Schallfrequenz von 2 MHz, dies z.B. bei der Online-Prüfung von Punktverschweißungen zwischen verzinkten Stahlblechen mit einer Dicke von 0,7 Millimetern.

Soll hingegen die Reflektion des transversal polarisierten Anteils einer Folge von Ultraschallpulsen am zu prüfenden Schweißpunkt während seiner Erzeugung zeitaufgelöst erfasst werden, so ergeben sich besondere Vorteile, wenn der Ultraschallsendewandler wie vorstehend bereits erwähnt angeordnet wird. Der Ultraschallempfangswandler wird so an der ersten Schweißelektrode angeordnet (in die der Ultraschallsendewandler die Folge von Ultraschallpulsen einschallt), dass der am zu prüfenden Schweißpunkt reflektierte transversale Anteil der Pulsfolge unmittelbar aus der ersten Elektrodenkappe ausgekoppelt wird. Dies lässt sich insbesondere dadurch realisieren, dass auch der Ultraschallempfangswandler auf der planen Innenfläche der ersten Elektrodenkappe angeordnet wird. Insbesondere kann in dieser Ausgestaltung der Ultraschallempfangswandler auch mit dem Ultraschallsendewandler identisch sein. Typische Schallfrequenzen der eingeschallten Ultraschallpulse liegen im Fall der Reflektionsgeometrie im Bereich von 5 bis 50 MHz, bevorzugt zwischen 15 und 25 MHz. Bewährt hat sich insbesondere eine Schallfrequenz von 20 MHz. Die minimale mögliche Schallfrequenz ist hier im Wesentlichen durch die Dimensionen der zu verschweißenden Bleche begrenzt, da die Wellenlänge der Ultraschallpulse in der Regel gleich oder kleiner als die aufzulösenden Abmessungen sein sollte. Die maximale Schallfrequenz ist in der Regel durch die elektroakustischen Eigenschaften der Sendewandler sowie durch einsetzende Interferenzerscheinungen begrenzt.

Die Anordnung von Ultraschallsendewandler bzw. Ultraschallempfangswandler unmittelbar an den Elektrodenkappen, insbesondere an planen Innenflächen der jeweiligen Elektrodenkappen, kombiniert mit der Erfassung nur der Änderung der Transmission bzw. Reflektion des transversalen Anteils einer Folge von Ultraschallpulsen führt dazu, dass die im praktischen Einsatz einer elektrischen Punktschweißmaschine im Rahmen einer großtechnischen Fertigung unweigerlich auftretende Abnutzung der Elektroden und deren regelmäßiger Austausch praktisch keinen Einfluss auf das Ergebnis der durchgeführten Onlineprüfung hat.

In einer vorteilhaften Weiterbildung der erfindungsgemäßen Vorrichtung gemäß beider vorstehend beschriebener Ausprägungen sind die relevanten Elektrodenkappen bezüglich ihrer Ultraschallführungseigenschaften dergestalt ausgebildet, dass ein in einer Elektrodenkappe propagierender transversal polarisierter Ultraschallpuls im Wesentlichen keine Transformation in ein longitudinal polarisierten Ultraschallpuls erfährt. Dies kann z.B. durch geeignete Formgebung der Elektrodenkappen sichergestellt werden. Auf diese Weise kann eine besonders hohe Messgenauigkeit erzielt werden.

Beim elektrischen Widerstandschweißen tritt zwar im Wesentlichen nur eine punktuelle Erwärmung der zu verschweißenden elektrisch leitfähigen Bleche ein, jedoch tritt zumindest beim Einsatz solcher Maschinen in der großtechnischen Fertigung ebenfalls eine deutliche Erwärmung der Schweißelektroden auf. Diese wird bei kommerziell erhältlichen Maschinen für das elektrische Widerstandsschweißen kompensiert, indem die Schweißelektroden hohl ausgeführt und ständig von einem Kühlmittel durchströmt werden. Um nun eine thermische Schädigung des erfindungsgemäß vorzusehenden Ultraschallsendewandlers und/oder des Ultraschallempfangswandlers zu vermeiden, werden der Ultraschallsendewandler und/oder der Ultraschallempfangswandler in einer bevorzugten Weiterbildung der erfindungsgemäßen Vorrichtungen so an den Schweißelektroden angeordnet, dass der Ultraschallsendewandler und/oder der Ultraschallempfangswandler ebenfalls vom Kühlmittel gekühlt werden. Insbesondere können der Ultraschallsendewandler und/oder der Ultraschallempfangswandler unmittelbar im Kühlmittel durchströmten Hohlraum im Inneren der Schweißelektroden angeordnet werden, so dass der Ultraschallsendewandler und/oder der Ultraschallempfangswandler ständig vom Kühlmittel umströmt werden.

Eine besonders vorteilhafte Anordnung von Ultraschallsendewandler und Ultraschallempfangswandler an den Elektrodenkappen von hohl ausgeführten Schweißelektroden ergibt sich beispielsweise aus der in der Einleitung bereits erwähnten EP 0 284 177. Die dort offenbarte vorgespannte Anordnung von Ultraschallsendewandler und Ultraschallempfangswandler im Inneren der kühlmitteldurchströmten Schweißelektroden, wobei Ultraschallsendewandler und Ultraschallempfangswandler auf plane Innenflächen der Elektrodenkappen aufgedrückt werden, wird durch diese Bezugnahme ausdrücklich zum Gegenstand der vorliegenden Anmeldung gemacht.

In einer weiteren vorteilhaften Weiterbildung der erfindungsgemäßen Vorrichtungen ist der Ultraschallsendewandler zur Erzeugung von Ultraschallpulsen eingerichtet, die jeweils ein transversal polarisierten Anteil S_{T} und ein longitudinal polarisierten Anteil S_{L} aufweisen. Die Auswerteeinheit ist weiterhin dazu eingerichtet, die Transmission des transversal polarisierten Anteils S_{T} und die Laufzeitverzögerung der longitudinal polarisierten Anteils S_{L} der Folge von Ultraschallpulsen durch den Schweißpunkt während seiner Erzeugung getrennt voneinander aufgelöst zu erfassen.

Wird hingegen auf die Reflektion des transversal polarisierten Anteils der Pulsfolge abgestellt, so ist die Auswerteeinheit bevorzugt dazu eingerichtet, die Reflektion des transversal polarisierten Anteils S_{T} am zum prüfenden Schweißpunkt und die Laufzeitverzögerung des longitudinal polarisierten Anteils S_{L} der Folge von Ultraschallpulsen durch den zu prüfenden Schweißpunkt getrennt voneinander zeitaufgelöst zu erfassen. In diesem Fall ist vorteilhaft an derjenigen Schweißelektrode, in die die vom Ultraschallsendewandler erzeugte Pulsfolge eingeschallt wird, ein erster Ultraschallempfangswandler zur Erfassung der reflektierten transversalen Anteile angeordnet, und in der anderen Schweißelektrode ist ein zweiter Ultraschallempfangswandler angeordnet, um die Laufzeitverzögerung des longitudinal polarisierten Anteils der Folge von Ultraschallpulsen bei ihrem Durchtritt durch den zu prüfenden Schweißpunkt zu erfassen.

Schließlich wird in einer alternativen Weiterbildung ein erster Ultraschallsendewandler an der ersten Schweißelektrode angeordnet, der dazu eingerichtet ist, transversal polarisierte Ultraschallpulse abzugeben ("Trans-Wandler"). In der zweiten Schweißelektrode wird ein Ultraschallempfangswandler angeordnet, der dazu eingerichtet ist, die vom "Trans-Wandler" abgegebenen transversal polarisierten Ultraschallpulse zu empfangen. Basierend auf dem Trans-Wandler und dem zugehörigen Empfangswandler wird die vorstehend beschriebene erfindungsgemäße Vorrichtung realisiert sowie das vorstehend beschriebene erfindungsgemäße Verfahren durchgeführt. Zusätzlich wird nun an der zweiten Schweißelektrode ein zweiter Ultraschallsendewandler angeordnet, der dazu eingerichtet ist, longitudinal polarisierte Ultraschallpulse abzugeben ("Long-Wandler"). Die vom Long-Wandler abgegebenen longitudinal polarisierten Ultraschallpulse durchqueren nun den in der Erstellung befindlichen Schweißpunkt in entgegen gesetzter Richtung zur Laufrichtung der transversal polarisierten Ultraschallpulse und gelangen zum Trans-Wandler. Im Trans-Wandler erzeugen die longitudinal polarisierten Ultraschallpulse des Long-Wandlers ein elektrisches Signal, welches nur eine geringe Amplitude aufweist, da der Trans-Wandler nicht auf die Umwandlung von longitudinal polarisierten Ultraschallpulsen in elektrische Signale optimiert ist. Aufgrund der hohen Transmission der longitudinal polarisierten Ultraschallpulse durch den zu prüfenden Schweißpunkt ist die Empfindlichkeit des Trans-(Sende-)Wandlers für longitudinal polarisierte Ultraschallpulse dennoch hoch genug, um ein auswertbares elektrisches Signal für die Bestimmung der Laufzeitverzögerung der longitudinal polarisierten Ultraschallpulse beim Durchqueren des Schweißpunkts z.B. für die Bestimmung (der Änderung) der Schallgeschwindigkeit in der sich ausbildenden Schweißlinse liefern zu können. Auf diese Weise lassen sich mit einem Trans-Sendewandler und einem Long-Sendewandler sowie nur einem Trans-Empfangswandler gleichzeitig die Änderung der Transmission der transversal polarisierten Ultraschallpulse sowie die Laufzeitverzögerung der longitudinal polarisierten Ultraschallpulse durch den zu prüfenden Schweißpunkt bestimmen.

Weitere Merkmale und Vorteile der erfindungsgemäßen Verfahren sowie der erfindungsgemäßen Vorrichtungen ergeben sich aus den Unteransprüchen sowie den nunmehr folgenden Ausführungsbeispielen, die anhand der beigefügten Zeichnung näher erläutert werden. In dieser zeigen:
Fig. 1:einen Schnitt durch die Schweißelektroden einer ersten erfindungsgemäßen Vorrichtung zur Prüfung von mittels elektrischem Widerstandsschweißen erzeugten Schweißpunkten zwischen beschichteten Blechen,
Fig. 2a bis 2d:eine schematische Darstellung der Vorgänge bei der Erzeugung eines Schweißpunkt mittels elektrischer Widerstandsschweißen zwischen beschichteten Blechen in zeitlicher Abfolge,
Fig. 3:ein Diagramm, in dem exemplarisch der Verlauf verschiedener bei der Durchführung des erfindungsgemäßen Verfahren gewonnener Messwerte zeitlich aufgelöst dargestellt ist,
Fig. 4:ein Diagramm, in dem der Verlauf der Transmission für transversal polarisierte Ultraschallpulse durch den in Erzeugung befindliche Schweißpunkt zeitlich aufgelöst dargestellt ist,
Fig. 5a bis 5c:Diagramme gemäß Fig. 3 für drei verschiedene Schweißpunkte, die unter Anwendung unterschiedlicher Schweißströme erzeugt wurden,
Fig. 6a bis 6c:metallographische Schnittbilder von Schweißpunkten, welche mittels der Schweißvorgänge gemäß der Figuren 5a bis 5c hergestellt wurden, gewonnen mittels Lichtmikroskopie, und
Fig. 7:ein empirisch ermitteltes Diagramm, welches die Bestimmung des Schweißlinsendurchmessers anhand von Ultraschallmessgrößen gemäß des erfindungsgemäßen Verfahrens erlaubt.

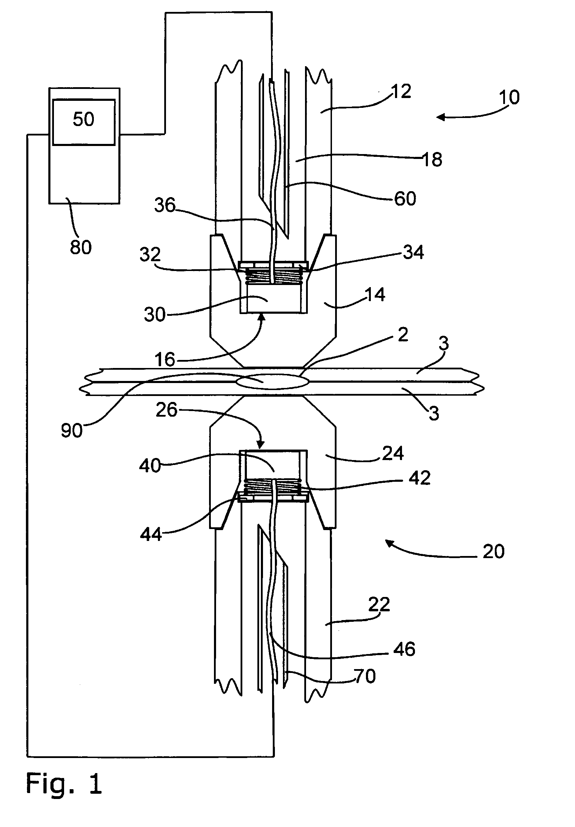

In Figur 1 ist dargestellt, wie zwei beschichtete Bleche 3 mit einer Maschine zur Erzeugung von Schweißpunkten mittels galvanischem Widerstandsschweißen verschweißt werden. Eine solche Maschine, die aus dem Stand der Technik vielfältig bekannt ist und daher in Figur 1 nicht im Detail gezeigt ist, weist eine erste Schweißelektrode 10 und eine zweite Schweißelektrode 20 auf, die jeweils einen ersten/zweiten Elektrodenschaft 12/22 und eine auswechselbare erste/zweite Elektrodenkappe 14/24 aufweisen. Die Elektrodenschäfte 12/22 weisen einen beispielsweise zylindrischen Querschnitt auf und sind als Hohlschäfte ausgebildet. Die auswechselbaren Elektrodenkappen 14/24 sind mittels an sich bekannter Verfahren auf den zugehörigen Elektrodenschäften 12/22 festgelegt, beispielsweise mittels Konus-Presssitz.

Mindestens einer der Schweißelektroden 10, 20 ist in Längsrichtung beweglich, so dass zwischen die Elektrodenkappen 14, 24 ein Stapel aus beispielsweise zwei Metallblechen 3 zur Erzeugung eines Schweißpunktes 2 geführt werden kann. Zur Ausbildung des Schweißpunktes 2 werden die ersten Schweißelektrode 10 und die zweite Schweißelektrode 20 jeweils gegen die Bleche 3 geführt, bis sich ein flächiger Kontakt zwischen den Elektrodenkappen 14, 24 und den jeweils angrenzenden Metallblechen 3 ergibt. Durch Anlegen eines Schweißstroms an die Schweißelektroden 10, 20 ergibt sich eine galvanische Aufheizung der Metallbleche 3 im zwischen den aufgedrückten Elektrodenkappen 14, 24 eingeschlossenen Bereich.

Um eine übermäßige thermische Belastung der Schweißelektroden 10, 20 zu vermeiden, werden die Schweißelektroden 10, 20 mittels Durchfluss eines Kühlmittels durch die jeweiligen Elektrodenschäfte 12, 22 intensiv gekühlt. Im gezeigten Ausführungsbeispiel wird das Kühlmittel über eine mittig angeordnete erste und zweite Kühlmittelzuführung 60, 70 zugeführt. Aufgrund der intensiven Kühlung der Schweißelektroden 10, 20 sowie der Geometrie des sich ausbildenden Strompfades durch die zu verschweißenden Bleche 3 ergibt sich eine maximale Erwärmung der Bleche 3 im Bereich ihres Berührpunktes mit dem jeweils benachbarten Blech 3. Bei fortgesetzter Anlegung eines Schweißstroms führt diese Erwärmung zum Aufschmelzen der Metallbleche 3 nebst eventuell aufgebrachter Oberflächenbeschichtungen und somit zur Ausbildung einer flüssigen Schweißlinse 90.

Erfindungsgemäß ist nun in der ersten Elektrodenkappe 14 der ersten Schweißelektrode 10 ein Ultraschallsendewandler 30 angeordnet, der dazu vorgesehen ist, eine Folge von Ultraschallpulsen abzugeben, welche einen transversal polarisierten Anteil aufweisen. Hierzu weist die obere Elektrodenkappe 14, welche einen im wesentlich zylindrischen Querschnitt hat, eine plane Innenfläche 16 auf. An dieser planen Innenfläche 16 unmittelbar angrenzend ist der Ultraschallsendewandler 30 angeordnet, dergestalt, dass die vom Ultraschallsendewandler 30 erzeugten transversal polarisierten Ultraschallpulse über die plane Innenfläche 16 in die Elektrodenkappe 14 eingekoppelt werden. Um eine gute Ankopplung der vom Ultraschallsendewandler 30 erzeugten Ultraschallpulse an die Elektrodenkappe 14 sicherzustellen, wird der Ultraschallsendewandler 30 mittels einer Druckfeder 32 gegen die Elektrodenkappe 14 vorgespannt. Dabei stützt sich die Druckfeder 32 rückseitig über einen Stützring 34 am ersten Elektrodenschaft 12 der ersten Schweißelektrode 10 ab. Selbstverständlich sind auch andere Montagearten des Ultraschallsendewandlers 30 möglich, der z.B. auch mittels Verkleben oder Verlöten an der planen Innenfläche 16 festgelegt werden kann.

Der Ultraschallsendewandler 30 ist über eine Zuleitung 36 mit einer externen Steuerungseinheit 80 verbunden, die u.a. dazu eingerichtet ist, die zur Ansteuerung des Ultraschallsendewandlers 30 erforderlichen Steuersignale (beispielsweise geeignete Hochspannungspulse) zu erzeugen.

In analoger Weise ist die zweite Elektrodenkappe 24 der zweiten Schweißelektrode 20 ausgebildet, an deren plane Innenfläche 26 unmittelbar angrenzend ein Ultraschallempfangswandler 40 angeordnet ist. Der Ultraschallempfangswandler 40 wird wiederum mittels einer Druckfeder 42, die sich über einen Stützring 44 am zweiten Elektrodenschaft 22 abstützt, gegen die plane Innenfläche 26 vorgespannt. Der Ultraschallempfangswandler 40 ist über eine Messleitung 46 mit der externen Steuerungseinheit 80 verbunden.

In der gezeigten Anordnung treten die vom Ultraschallsendewandler 30 in kurzer Folge erzeugten Ultraschallpulse über die plane Innenfläche 16 in die erste Elektrodenkappe 14 ein, werden in das obere zu verschweißende Blech eingekoppelt, treten in das untere zu verschweißende Blech 3 über, wobei sie den Bereich durchqueren, in dem sich der Schweißpunkt 2 ausbildet, insbesondere die sich ausbildende Schweißlinse 90, werden aus dem unteren Blech 3 in die untere Elektrodenkappe 24 ausgekoppelt und treten über die plane Innenfläche 26 in den Ultraschallempfangswandler 40 ein.

Teil der externen Steuerungseinheit 80 ist eine Auswerteeinheit 50, die dazu vorgesehen ist, die Änderung der Transmission des transversalen polarisierten Anteils der Folge der vom Ultraschallsendewandler erzeugten Ultraschallpulse durch den Schweißpunkt 2 zwischen den Blechen 3 während der Erzeugung des Schweißpunktes 2 zeitaufgelöst zu erfassen.

In einer ersten Ausgestaltung ist der Ultraschallsendewandler 30 dazu eingerichtet, im Wesentlichen nur transversal polarisierte Ultraschallpulse mit hoher Pulsfolgefrequenz zu erzeugen.

In einer alternativen Ausgestaltung ist es jedoch auch möglich, den Ultraschallsendewandler 30 so auszugestalten, dass die von ihm mit hoher Pulsfolgefrequenz erzeugten Ultraschallpulse sowohl einen transversal polarisierten Anteil als auch einen longitudinal polarisierten Anteil aufweisen. Insbesondere im letzteren Fall ist es ohne besondere Einrichtung des Ultraschallempfangswandlers 40 möglich, die Transmission des transversal polarisierten Anteils der Ultraschallpulse mittels der Auswerteeinheit 50 zu erfassen. Dies kann beispielsweise dadurch erzielt werden, dass die Ultraschallpulse hinreichend kurz sind und die Auswerteeinheit 50 das vom Ultraschallempfangswandler 40 empfangene Ultraschallsignal mit sehr hoher zeitlicher Auflösung abtastet. Beim Durchqueren des in Erzeugung befindlichen Schweißpunktes 2 tritt nämlich aufgrund der verschiedenen Schallgeschwindigkeiten für longitudinal und transversal polarisierte Ultraschallwellen eine zeitliche Auftrennung der Ultraschallpulse in einen transversalen Anteil und in einen longitudinalen Anteil auf. Typischerweise ist die Schallgeschwindigkeit für transversal polarisierte Schallwellen niedriger, sodass der transversal polarisierte Anteil eines Ultraschallpulses, der sowohl einen longitudinalen als auch einen transversalen Anteil aufweist, stets etwas später beim Empfangswandler 40 eintrifft als der longitudinal polarisierte Anteil. Ein ausreichendes zeitliches Auflösungsvermögen der Auswerteeinheit 50 erlaubt es bei hinreichend kurzen Pulsen daher, die Transmissions- bzw. Reflektionseigenschaften des in Erzeugung befindlichen Schweißpunktes 2 für transversal polarisierte und longitudinal polarisierte Ultraschallpulse getrennt voneinander zu erfassen und auszuwerten.

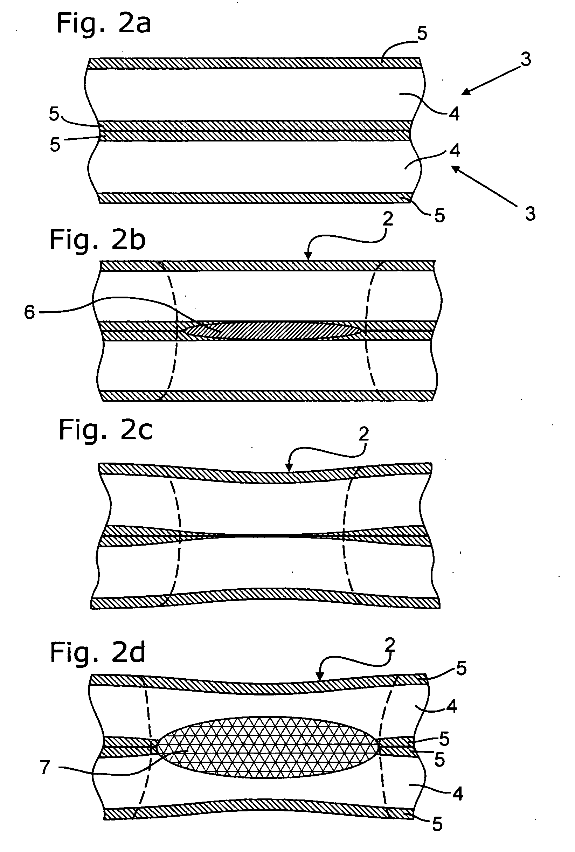

Die Bildsequenz der Figuren 2a bis 2d zeigt nunmehr modellhaft, welche Vorgänge bei der Erzeugung eines Schweißpunktes 2 zwischen zwei beschichteten Metallblechen 3 mittels elektrischem Widerstandsschweißen ablaufen. Zur Erhöhung der Übersichtlichkeit wurde darauf verzichtet, die Schweißelektroden der hierbei zum Einsatz kommenden Schweißmaschine zu zeigen. Vielmehr wird nur ein Schnitt durch die beiden Metallbleche 3 im Bereich des sich ausbildenden Schweißpunktes 2 gezeigt.

Figur 2a zeigt zwei aufeinander liegende verzinkte Stahlbleche 3, die mittels eines Schweißpunkts 2 miteinander verbunden werden sollen. Jedes Blech 3 weist einen Blechkern 4 auf, der im gezeigten Ausführungsbeispiel aus einem geeigneten Karosseriestahl besteht. Weiterhin ist jedes Blech 3 beidseitig mit einer Korrosionshemmenden Oberflächenbeschichtung 5 beispielsweise aus Zink versehen. Im gezeigten Ausführungsbeispiel handelt es sich bei den zu verschweißenden beschichteten Blechen 3 um feuerverzinkte Stahlbleche für den Karosseriebau. Vor Beginn des Schweißvorgangs liegen die miteinander zu verschweißenden Stahlbleche 3 flächig aufeinander, so dass sich ein elektrisch leitfähiger Kontakt zwischen den aneinander grenzenden Oberflächenschichten 5, hier bestehend aus Zink, ausbildet.

Figur 2b zeigt nun schematisch denjenigen Bereich der zu verschweißenden Bleche 3, in dem sich der Schweißpunkt 2 bei Anlegen eines Schweißstroms an die oberseitig und unterseitig aufgesetzten Schweißelektroden 10, 20 ausbildet. Der angelegte hohe Schweißstrom (- 1-10 kA) führt zu einer starken lokalen Erwärmung der Bleche 3, die im Wesentlichen auf denjenigen räumlichen Bereich eingegrenzt ist, der zwischen den aufgesetzten die Schweißelektroden 10 und 20 eingeschlossen ist. Die stärkste Erwärmung ergibt sich im Kontaktbereich zwischen den zu verschweißenden Blechen 3, da die außen liegenden Bereiche der zu verschweißenden Bleche 3 durch den mechanischen Kontakt mit den gekühlten Schweißelektroden 10, 20 selbst effektiv gekühlt werden.

Im hier gezeigten Ausführungsbeispiel der Verschweißung von feuerverzinkten Stahlblechen für den Karosseriebau weist das Material der aus Zink bestehenden Oberflächenbeschichtung 5 einen deutlich niedrigeren Schmelzpunkt auf als das Materials des Blechkerns 4, welcher aus Karosseriestahl besteht. Zink weist einen Schmelzpunkt auf, der in der Größenordnung von 470 C° liegt, wogegen der verwendete Karosseriestahl einen Schmelzpunkt von über 1450 C° aufweist. Daher führt die starke lokale Aufheizung der zu verschweißenden Stahlbleche 3 zuerst zum lokalen Aufschmelzen der Oberflächenbeschichtungen 5 und zur Ausbildung einer Zinkschweißlinse 6, die aus Figur 2b ersichtlich ist.

Da die Schweißelektroden 10, 20 der zum Einsatz kommenden Schweißmaschine mit höherem Anpressdruck auf die zu verschweißenden Bleche 3 aufgesetzt werden, der für die gesamte Dauer des Schweißvorgangs aufrechterhalten wird, wird ein starker mechanischer Druck auf die flüssige Zinkschweißlinse 6 ausgeübt, was letztlich eine Verdrängung des aufgeschmolzenen Zinks aus dem Bereich des sich ausbildenden Schweißpunkts 2 zur Folge hat. Dies ist in Figur 2c gezeigt, in der die (auch für Zinkkleber) charakteristischen oberseitigen und unterseitigen Einprägungen im Bereich des erzeugten Schweißpunkts 2 für mittels elektrischem Widerstandschweißen erzeugte Schweißpunkte andeutet.

Wird der Schweißstrom weiter aufrechterhalten, so erhitzt sich das zwischen den Schweißelektroden 10, 20 gefangene Material der aufeinander liegenden Bleche 3 kontinuierlich weiter, bis lokal der Schmelzpunkt der nunmehr unmittelbar aufeinander liegenden Blechkerne 4 seinen Schmelzpunkt erreicht. Wird der Schmelzpunkt überschritten, so schmilzt das Material der Blechkerne 4 im Kontaktbereich zwischen den Blechen 3 lokal auf, d. h. es bildet sich eine flüssige Stahlschweißlinse 7 aus, deren Größe bei Aufrechterhalten des Schweißstroms kontinuierlich zunimmt. Ein optimaler Schweißvorgang wird dann realisiert, wenn die Stahlschweißlinse 7 in ihrem Durchmesser praktisch die Abmessungen der Kontaktflächen der Schweißelektroden 10, 20 mit den zu verschweißenden Blechen 3 erreicht hat. Bei Erreichen der optimalen Ausdehnung der Stahlschweißlinse 7 wird der anliegende Schweißstrom abgeschaltet, was zu einer raschen Abkühlung der zwischen den Schweißelektroden 10, 20 gefangenen Bleche 3 führt. Die flüssige Stahlschweißlinse 7 erstarrt unter Ausbildung eines in der Regel vom Gefüge der Blechkerne 4 abweichenden Materialgefüges. Der bei optimaler Verfahrensführung erzeugte Schweißpunkt 2 ist dann aus Figur 2d ersichtlich. Die erstarrte Stahlschweißlinse 7 ist praktisch untrennbar mit beiden zu verschweißenden Blechen 3 verbunden.

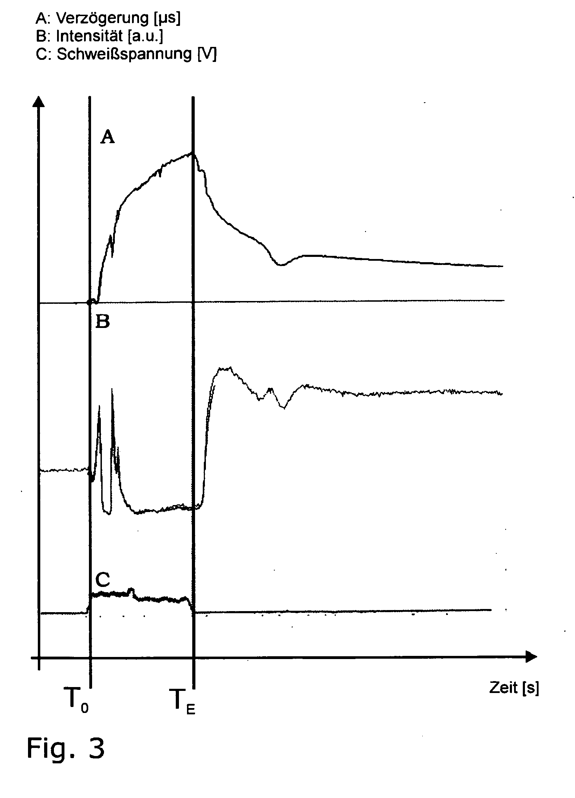

Figur 3 zeigt nun den Verlauf verschiedener Ultraschallsignale, die bei der Erzeugung eines Schweißpunkts gemäß der Figurensequenz 2a bis 2d mittels des erfindungsgemäßen Verfahrens zwischen zwei aufeinander liegenden feuerverzinkten Karosseriestahlblechen 3 gewonnen wurden. Als X-Achse ist die Zeit aufgetragen, wobei ein Intervall von 0,8 Sekunden dargestellt ist. Der Schweißstrom wird typischerweise über eine Dauer von 0,2 Sekunden aufrechterhalten, wobei mittels einer Regelung z.B. über eine Anpassung der Ausgangsspannung ein konstanter Strom von ca. 10kA bei einer Spannung zwischen 0 und 2V eingestellt wird.

Der sich ausbildende Schweißpunkt 2 wird während seiner Erzeugung kontinuierlich mit einer Folge von kurzen Ultraschallpulsen hoher Wiederholrate durchschallt. Der hier zum Einsatz gekommene Ultraschallsendewandler 30 war dabei dazu ausgelegt, Ultraschallpulse mit einer Pulsfolgefrequenz in der Größenordnung von 1 bis 2 Kilohertz zu erzeugen. Typische Schallfrequenzen lagen hier im Bereich von 0,1 bis 10 Megahertz. Die tatsächliche Schallfrequenz im hier gezeigten Beispiel betrug 2 MHz bei einer Gesamtdicke der zu verschweißenden verzinkten Stahlbleche von jeweils etwa 0,7 Millimetern. Insgesamt ist in der Transmissionsgeometrie der Frequenzbereich von 1 bis 5 MHz besonders bevorzugt.

Die zuunterst gezeigte und mit C bezeichnete Kurve zeigt den Verlauf der an den Schweißelektroden 10, 20 anliegenden Schweißspannung über der Zeit. Deutlich ist zu erkennen, dass zum Zeitpunkt 0 der Schweißstrom angelegt und zum Zeitpunkt 0,2 Sekunden abgeschaltet wurde.

Die mit B bezeichnete mittlere Kurve zeigt zeitlich aufgelöst den Verlauf der Transmissionsamplitude des transversal polarisierten Anteils der vom Ultraschallsendewandler 30 abgegebenen Pulsfolge. Der transversal polarisierte Anteil wurde dabei vom gleichzeitig vom Ultraschallsendewandler 30 erzeugten longitudinalen Anteil getrennt, indem der Ultraschallempfangswandler 40 und die nachgeschaltete Auswertungseinheit 50 mit der entsprechenden zeitlichen Auflösung betrieben wurden. Aufgrund der vorstehend bereits erwähnten Tatsache, dass die Schallgeschwindigkeit für transversal polarisierte und longitudinal polarisierte Ultraschallwellen verschieden sind, tritt beim Durchqueren des in Erzeugung befindlichen Schweißpunkts 2 eine zeitliche (und auch räumliche) Separation des longitudinalen polarisierten und des transversal polarisierten Pulsanteils auf. Da die Schallgeschwindigkeit der transversal polarisierten Ultraschallwellen unter der Schallgeschwindigkeit der longitudinal polarisierten Ultraschallwellen liegt, ist der zuerst beim Ultraschallempfangswandler 40 eintreffende Puls der longitudinal polarisierte Anteil und der nachfolgend eintreffende Puls der transversal polarisierte Anteil des vom Ultraschallsendewandler 30 abgegebenen Ultraschallpulses. Aufgrund der auftretenden zeitlichen Trennung beider Pulsanteile ist es möglich, beide Pulsanteile getrennt auszuwerten.

Noch einfacher ist die Trennung von transversal und longitudinal polarisierten Ultraschallpulsen in der in der Beschreibungseinleitung skizzierten Anordnung mit einem in verschiedenen Schweißelektroden angeordneten Trans- und Long-Sendewandlern und einem Trans-Empfangswandler, da die unterschiedlich polarisierten Ultraschallpulse hier in verschiedenen Laufrichtungen propagieren und von verschiedenen Empfangswandlern empfangen werden. Mithin stehen die elektrischen Signale von zwei getrennten Empfangswandlern zur Verfügung, die getrennt einer Auswertung zugeführt werden können.

Die Transmission des transversal polarisierten Pulsanteils weist nur bei Ausbildung eines optimalen Schweißpunkts 2 einen charakteristischen Verlauf auf. Dieser ist aus der mit B gekennzeichneten Kurve der Figur 3 ersichtlich. Vor Anlegen der Schweißspannung weist die Transmission einen im Wesentlichen konstanten, verhältnismäßig niedrigen Wert auf, da der mechanische Kontakt zwischen den aufeinander liegenden Blechen 3 keine optimale Ankopplung des ersten Blechs 3 an das zweite Blech darstellt. Mit einsetzender Erwärmung der aufeinander liegenden Bleche 3 im Bereich des sich ausbildenden Schweißpunkts 2 tritt eine innigere mechanische Verbindung der Bleche 3 auf, welche von einer deutlichen Verbesserung der akustischen Ankopplung der Bleche 3 aneinander begleitet wird und somit zu einer deutlichen Zunahme der Transmission führt.

Beginnt jedoch die Zinkbeschichtung 4 aufzuschmelzen, so bricht die (transversale) Transmission durch den in Erzeugung befmdlichen Schweißpunkt drastisch ein, da sich in der flüssigen Zinkschweißlinse 6 transversal polarisierte Ultraschallwellen nicht ausweiten können. Mit zunehmendem Durchmesser der Zinkschweißlinse nimmt daher die Transmission des transversal polarisierten Pulsanteils dramatisch ab.

Ist jedoch der Durchmesser der sich ausbildenden flüssigen Zinkschweißlinse 6 in der Größenordnung der Kontaktflächen der Schweißelektroden 10, 20 mit den zu verschweißenden Blechen 3, so führt der von den Elektroden 10, 20 auf die Bleche ausgeübte Druck zu einer Verdrängung des flüssigen Zinkmaterials aus dem Bereich des sich ausbildenden Schweißpunkts 2, was zu einer Verformung der Bleche 3 und einem In-Kontakt-gelangen der stählernen Blechkerne 4 der Bleche 3 führt. Gleichzeitig hiermit steigt die Transmission des transversal polarisierten Pulsanteils durch den in Erzeugung befindlichen Schweißpunkt 2 erneut drastisch an.

Wird der Schweißstrom weiterhin aufrechterhalten, so führt die fortgesetzte Aufheizung der Bleche 3 im Bereich des sich ausbildenden Schweißpunkts 2 zur Ausbildung einer flüssigen Stahlschweißlinse 7 im Kontaktbereich zwischen den zu verschweißenden Blechen 3. Die sich ausbildende flüssige Stahlschweißlinse 7 weist anfänglich eine kleine Querschnittsfläche relativ zur Kontaktfläche der Schweißelektroden 10, 20 mit den zu verschweißenden Blechen 3 auf, so dass nur eine gewisse Schwächung der Ultraschalltransmission für transversal polarisierte Ultraschallwellen auftritt. Die Transmission durch den Schweißpunkt 2 nimmt jedoch mit sich vergrößernder flüssiger Stahlschweißlinse 7 kontinuierlich ab und erreicht ein Minimum, sobald die Abmessungen der Stahlschweißlinse 7 im Bereich der Größe der Kontaktfläche der Schweißelektroden 10, 20 mit den zu verschweißenden Blechen 3 liegen. So lange die Stahlschweißlinse 7 flüssig ist, verharrt nun die Transmission für transversal polarisierte Ultraschallwellen im Bereich von 0. Nach Abschalten des Schweißstroms bei etwa 0,2 Sekunden tritt eine Rekristallisation der flüssigen Stahlschweißlinse 7 auf, die mit einer starken Erhöhung der Transmission für transversal polarisierte Ultraschallwellen durch den nunmehr vollständig ausgebildeten Schweißpunkt 2 einhergeht. Aufgrund der ordnungsgemäß ausgebildeten Stahlschweißlinse 7, welche praktisch untrennbar mit dem Materialgefüge der Blechkerne 4 der zu verbindenden Bleche 3 verbunden ist, ist nunmehr die Ultraschallankopplung der beiden zu verbindenden Bleche gegenüber dem Ausgangsniveau deutlich erhöht.

Das deutlich nach Abschalten des Schweißstroms auftretende, weniger klar ausgeprägte dritte Minimum der Ultraschalltransmission für transversal polarisierte Ultraschallwellen durch den Schweißpunkt 2 ist mit Re- und Umkristallisationseffekten in der sich verfestigenden Stahlschweißlinse 7 korreliert.

Die mit A bezeichnete Kurve des Diagramms der Figur 3 zeigt schließlich den Verlauf der beim Durchgang durch den in Erzeugung befindlichen Schweißpunkt 2 auftretende Laufzeitverzögerung für longitudinale polarisierende Ultraschallpulse. Auch hier lassen sich die Ausbildung einer Zinkschweißlinse 6, die Verdrängung des aufgeschmolzenen Zinkmaterials aus dem Kontaktbereich zwischen den zu verbindenden Blechen 3 und nachfolgend die Ausbildung einer flüssigen Stahlschweißlinse 7 mit nachfolgender Rekristallisation im Kurvenverlauf identifizieren. Der starke Anstieg der Laufzeit der longitudinal polarisierten Pulsanteile beim Durchgang durch den in Erzeugung befindlichen Schweißpunkt 2 nach Einschalten des Schweißstroms wird durch die Ausbildung einer flüssigen Zinkschweißlinse 6 zwischen den zu verbindenden Blechen 3 verursacht, da im flüssigen Zink eine deutliche Abnahme der Schallgeschwindigkeit auftritt.

Wird das flüssige Zink aus dem Kontaktbereich zwischen den Blechen 3 verdrängt, so nimmt die Laufzeitverzögerung kurzzeitig ab, da die Dicke der zu durchlaufenden flüssigen Zinkschicht abnimmt (Im gezeigten Diagramm kann der auftretende Einbruch der Laufzeitverzögerung evtl. auch durch ein Rauschen des Messsignals verursacht sein.)

Ist jedoch die flüssige Zinkschweißlinse 6 zu wesentlichen Teilen aus dem Kontaktbereich verdrängt, so nimmt die Laufzeitverzögerung aufgrund thermischer Ausdehnungseffekte in den stählernen Blechkernen 4 erneut zu. Hat eine ausreichende Erwärmung der Blechkerne 4 stattgefunden, so beginnt sich die flüssige Stahlschweißlinse 7 auszubilden, was erneut mit einer deutlichen Abnahme der Schallgeschwindigkeit und somit einer deutlichen Zunahme der Laufzeitverzögerung verbunden ist. Parallel mit der Größenzunahme der sich ausbildenden flüssigen Stahlschweißlinse 7 nimmt auch die Laufzeitverzögerung stetig zu, die ihr Maximum bei Erreichen des maximalen Stahlschweißlinsendurchmessers erreicht.

Der in der Laufzeitverzögerung auftretende Knick (d.h. die Änderung der Steigung) ist unmittelbar mit dem Aufschmelzen der Stahlkerne verbunden. Der Koeffizient "Änderung der Schallgeschwindigkeit / Änderung der Temperatur" ist für die feste und die flüssige Phase deutlich verschieden, wobei die Schallgeschwindigkeit in der flüssigen Phase deutlich schwächer mit der Temperatur variiert als in der festen Phase.

Nach Abschalten des Schweißstroms rekristallisiert die flüssige Stahlschweißlinse 7, wobei sich während des Abkühlungsvorgangs Phasenänderungen ergeben können, die ebenfalls einen Einfluss auf die Schallgeschwindigkeit longitudinal polarisierter Ultraschallwellen in der erstarrten Stahlschweißlinse 7 haben können. Parallel verändert sich die Schallgeschwindigkeit aufgrund thermischer Effekte. Sind die Erstarrung der Stahlschweißlinse 7, Umkristallisationseffekte und die Abkühlung der Stahlschweißlinse im wesentlichen abgeschlossen, so verbleibt die Laufzeitverzögerung durch den ausgebildeten Schweißpunkt 2 auf einem gegenüber der Ausgangslage leicht erhöhten Niveau, was im wesentlichen durch das in der erstarrten Stahlschweißlinse gegenüber dem festen Ausgangsmaterial der Blechkerne 4 veränderte Materialgefüge bedingt ist.

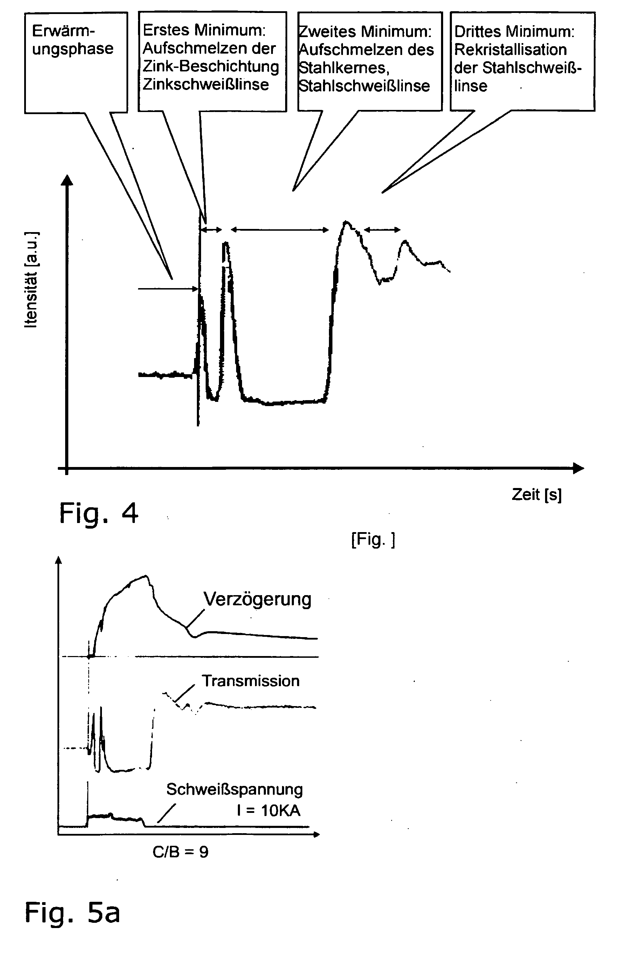

Figur 4 zeigt nunmehr nochmals den Verlauf der mit B gekennzeichneten Kurve aus Figur 3, d.h. den zeitabhängigen Verlauf der Transmission für transversal polarisierte Ultraschallwellen durch den sich ausbildenden Schweißpunkt 2, diesmal jedoch exemplarisch für einen anderen (ebenfalls ordnungsgemäß ausgebildeten) Schweißpunkt 2. Auch hier findet sich wieder die bereits anhand von Kurve B des Diagramms aus Figur 3 diskutierte Abfolge aus einer Erwärmungsphase, in der die Transmission zunimmt, einem ersten Minimum, welches mit der Ausbildung einer flüssigen Zinkschweißlinse 6 korreliert ist, einem zweiten Minimum, welches mit der Ausbildung einer flüssigen Stahlschweißlinse 7 korreliert ist und einem dritten Minimum, welches mit Rekristallisationeffekten bei der Erstarrung der flüssigen Stahlschweißlinse 7 korreliert ist. Schematisch eingezeichnet ist in Figur 4 die Breite (d.h. hier die Dauer) des ersten Minimums B und die Breite des zweiten Minimums C. Die Größen B und C können durch geeignete Verarbeitung des zeitlichen Verlaufs der Transmission für transversal polarisierte Ultraschallwellen durch den in Erzeugung befindlichen Schweißpunkt 2 messtechnisch erfasst und zur Charakterisierung des erzeugten Schweißpunkts 2 herangezogen werden.

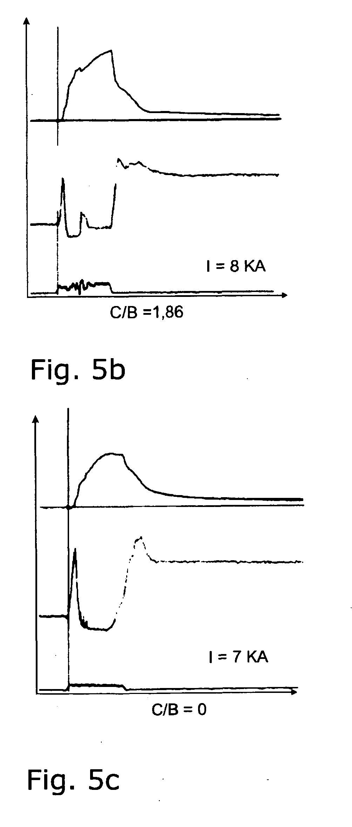

Die Sequenz der Figuren 5a, 5b und 5c zeigt nunmehr exemplarisch Mess ergebnisse analog zur den in Figur 3 diskutierten für drei verschiedene Schweißpunkte 2, die durch Anlegen unterschiedlicher Schweißströme zwischen identischen Stahlblechen 3 erzeugt wurden. Figur 5a zeigt den Verlauf der Laufzeitverzögerung des longitudinal polarisierten Pulsanteils und der Transmission des transversal polarisierten Pulsanteils beim Durchgang durch den sich ausbildenden Schweißpunkt 2, wobei hier ein Schweißstrom in Höhe von 10 kA über eine Dauer von 0,2 Sekunden angelegt wurde. Figur 5b zeigt den Verlauf der gleichen Messgrößen für einen Schweißstrom von 8 kA, Figur 5c zeigt schließlich den zeitlichen Verlauf der gleichen Messgrößen für den Fall, dass ein Schweißstrom von nur 7kA für eine Zeitdauer von 0,2 Sekunden angelegt wird.

Figur 5a zeigt deutlich das Auftreten eines ersten Minimums kurzer Dauer B in der Transmission und eines zweiten Minimums von langer Dauer B. Setzt man die Dauer C des zweiten Minimums ins Verhältnis zur Dauer B des ersten Minimums, so ergibt sich hier ein Wert für C dividiert durch B von 9.

Beträgt der Schweißstrom hingegen nur 8 kA, so ergibt sich, wie aus Figur 5b ersichtlich, ein erstes Minimum mit deutlich erhöhter Dauer B, wogegen das zweite Minimum weniger stark ausgeprägt und von kürzerer Dauer C ist. Das hier auftretende Verhältnis von C zu B beträgt nunmehr nur noch 1,86.

Beträgt der Schweißstrom schließlich nur noch 7 kA, so tritt nur noch ein einziges Minimum mit langer Dauer B auf. Identifiziert man das hier auftretende eine Minimum mit der Ausbildung einer Zinkschweißlinse, so hat das Verhältnis von C zu B den Wert 0.

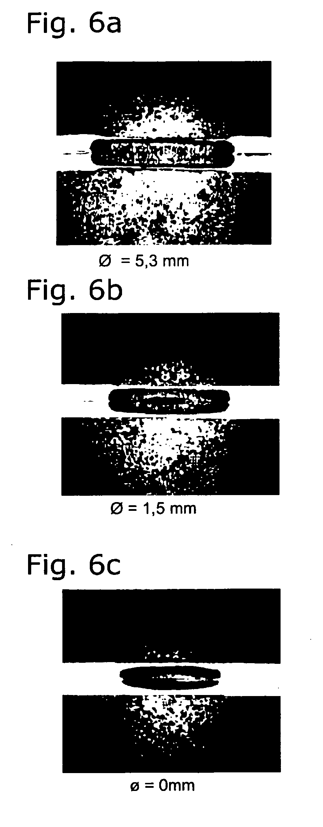

Die Figuren 6a bis 6c stellen lichtmikroskopische Aufnahmen von metallographischen Schnitten dar, die von den Schweißpunkten 2 angefertigt wurden, welche bei den aus den Figuren 5a bis 5c ersichtlichen Schweißvorgängen erzeugt wurden. Alle lichtmikroskopischen Aufnahmen weisen den gleichen Maßstab auf. Die Gesamtdicke der zu verschweißenden Bleche 3 betrug jeweils etwa 0,7 Millimeter. Anhand dieser metallographischen Schnitte ist eine Klassifikation der erzeugten Schnittpunkte anhand vorgegebener Kriterien möglich. Ein oftmals verwendetes Kriterium bezieht sich auf die Dicke t der zu verschweißenden Metallbleche. Ein Schweißpunkt wird als "gut" klassifiziert, wenn für seinen Schweißlinsendurchmesser d gilt:
"gut": d ist größer/gleich als 4xWurzel t
Hingegen wird er als "schlecht" klassifiziert, wenn gilt:
   "schlecht": d ist kleiner als 4xWurzel t

Ein als "gut" klassifizierter Schweißpunkt weist mit hoher Wahrscheinlichkeit eine ausreichende mechanische Belastbarkeit auf. Ein als "schlecht" klassifizierten Schweißpunkt weist hingegen mit hoher Wahrscheinlichkeit eine nicht ausreichende mechanische Belastbarkeit auf.

Die Aufnahme der Figur 6a zeigt eine sehr gut ausgeprägte Stahlschweißlinse 7, welche innig mit dem Material der miteinander zu verbindenden Bleche 3 verbunden ist und einen Durchmesser von etwa 5,3 mm aufweist. Der optische Eindruck der Stahlschweißlinse weicht ab vom optischen Eindruck der Stahlbleche, da sich das Materialgefüge der erstarrten Stahlschweißlinse 7 vom Materialgefüge in den ungestörten Blechkernen 4 der Bleche 3 unterscheidet.

Die Randbereiche der Stahlschweißlinse 7 zeigen eine geringfügig andere Textur sowohl als das umgebende ungestörte Material der Blechkerne 4 als auch als das Innere der Stahlschweißlinse 7, da in dieser "Wärmeeinflusszone" wiederum ein anderes Materialgefüge vorliegt. In der Wärmeeinflusszone hat aufgrund der Wärmeeinwirkung bereits eine Ausbildung von Kristalliten mit veränderter Kristallstruktur eingesetzt, ohne dass das Material hier aufgeschmolzen wäre. Oftmals sind diese Kristallite bei geeigneter Probenpräparation und ausreichender Vergrößerung unmittelbar optisch sichtbar.

Der in Figur 6a gezeigte Schweißpunkt 2 ist optimal ausgebildet und wird aufgrund seiner Abmessungen als "gut" klassifiziert.

Figur 6b zeigt den Schweißpunkt 2, der durch den Schweißvorgang gemäß Fig. 5 b erzeugt wurde. Bei genauem Hinsehen erkennt man im Inneren der dunkel erscheinenden grobkörnig texturierten Wärmeinflusszone einen nochmals geringfügig du nkler erscheinenden Bereich mit abweichender Textur, (welcher zur Verdeutlichung nochmals optisch hervorgehoben wurde). Dieser innerste Bereich stellt eine Stahlschweißlinse mit nur geringem Durchmesser dar, die innig mit dem Material der Blechkerne 4 der zu verbindenden Bleche 3 verbunden ist. Die bei diesem Schweißvorgang erzeugte Schweißlinse weist jedoch nur einen Durchmesser von etwa 1,5 mm auf.

Die weiterhin vorhandene, ausgedehnte, die Schweißlinse umgebende Wärmeeinflusszone stellt jedoch keinen Bereich dar, in dem das Material der Blechkerne 4 unter Ausbildung einer gemeinsamen Stahlschweißlinse 7 aufgeschmolzen war. Vielmehr resultiert der abweichende optische Eindruck hier ausschließlich aus Umkristallisationsprozessen, die bei der Erwärmung der Blechkerne 3 im Gefüge der Stahlbleche 4 aufgetreten sind.

Bei genauem Hinsehen erkennt man weiterhin, dass außerhalb der gering ausgedehnten zentralen Stahlschweißlinse 7 in der Wärmeeinflusszone eine optisch wahrnehmbare Trennung zwischen den Blechen 3 vorhanden ist. Hier ist eine mechanische Verbindung zwischen den Blechen 3 nur über miteinander verschmolzene Zinkschichten 5 entstanden.

Aufgrund der nur geringen Ausdehnung der ausgebildeten Stahlschweißlinse 7 ist der hier erzeugte Schweißpunkt 2 als "schlecht" zu klassifizieren.

Figur 6c zeigt nun einen Schnitt durch den Schweißpunkt 2, welcher bei der Verfahrensführung gemäß Fig. 5c erzeugt wurde. Deutlich ist zu erkennen, dass sich über die gesamte Breite der verfärbten Wärmeeinflusszone eine dunkel erscheinende Trennung zwischen beiden Blechen 3 erstreckt. Hier hat offenbar keine innige Verbindung der Materialien der Blechkerne 4 stattgefunden. Allenfalls hat hier ein Aufschmelzen der Zinkbeschichtungen 5 unter Ausbildung einer Zinkschweißlinse stattgefunden, welche eine schwache mechanische Verbindung der Bleche 3 realisiert (d.h. hier liegt evtl. ein "Zinkkleber" vor).

Bereits aufgrund des verschwindenden Schweißlinsendurchmessers d (d=0) ist dieser Schweißpunkt als "schlecht" zu klassifizieren.

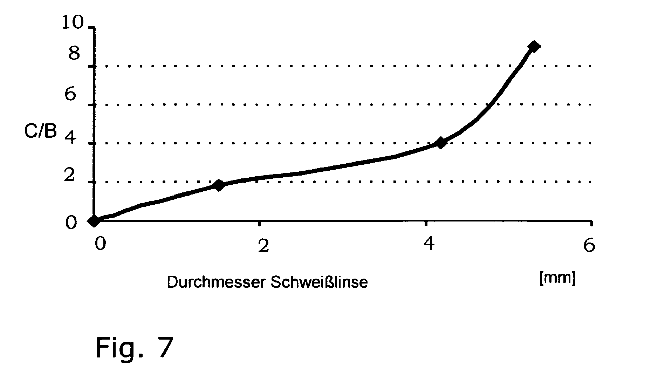

In Figur 7 ist dargestellt, dass ein zur Klassifikation der erzeugten Schweißpunkte 2 geeigneter reproduzierbarer Zusammenhang zwischen dem erzielten Schweißlinsendurchmesser D und dem Verhältnis C zu B (Dauer des zweiten Minimums im Verhältnis zur Dauer des ersten Minimums) auffinden lässt. Erfasst man mittels des findungsgemäßen Verfahrens die Parameter B und C, so ist es für gegebene Material- und Vorrichtungsparameter möglich, eine mittels elektrischem Widerstandsschweißen erzeugten Schweißpunkt 2 anhand des Verhältnisses C zu B zu klassifizieren. Wird ein erfindungsgemäßes Verfahren und/oder eine erfindungsgemäße Vorrichtung beispielsweise bei einer Großserienfertigung von Fahrzeugkarosserien eingesetzt, so kann ein Selektionsprozess auf einer Onlinebewertung von mittels elektrischem Widerstandsschweißen erzeugten Schweißpunkten auf der Ermittlung der Parameter C und B basieren, deren Verhältnis mit empirisch ermittelten Werten für ausreichend mechanisch belastbare Schweißpunkte verglichen werden kann. Liegt das Verhältnis C/B unter einem Minimalwert, so ist der geprüfte Schweißpunkt fehlerhaft, liegt C/B darüber, so ist der geprüfte Schweißpunkt ordnungsgemäß. Im hier gezeigten Ausführungsbeispiel, bei dem Zinkbeschichtete Stahlbleche mit einer Gesamtdicke von je 0,7 mm miteinander verschweißt wurden, lag der kritische Wert für C/B bezogen auf das vorgenannte Kriterium
"gut": d ist größer/gleich 4xWurzel aus t
bei etwa 6, d.h. Schweißpunkte können wie folgt charakterisiert werden:
"gut": (C/B) ist größer/gleich 6
"schlecht": (C/B) ist kleiner 6

## Patentansprüche

1. Verfahren zur Online-Prüfung eines mittels elektrischem Widerstandsschweißen erzeugten Schweißpunkts (2) zwischen zwei beschichteten Blechen (3) mittels Ultraschall, wobei das Material des Blechkerns einen anderen Schmelzpunkt aufweist als das Material der Beschichtung, mit den folgenden Verfahrensschritten:
a. Erzeugen einer Folge von Ultraschallpulsen, die einen transversal polarisierten Anteil aufweisen,
b. Durchschallen des zu prüfenden, mittels elektrischem Widerstandsschweißen erzeugten Schweißpunkts (2) mit der Folge von Ultraschallpulsen während der Erzeugung des Schweißpunkts (2),
c. Empfangen der Folge von Ultraschallpulsen nach dem Durchtritt der Ultraschallpulse durch den Schweißpunkt (2),
**dadurch gekennzeichnet, dass**
d. die Änderung der Transmission des transversal polarisierten Anteils der Folge von Ultraschallpulsen während der Erzeugung des zu prüfenden Schweißpunkts (2) zeitlich aufgelöst erfasst wird, wobei weiterhin analysiert wird, ob ein erstes und ein zweites Minimum in der Transmission auftreten.

2. Verfahren gemäß Anspruch 1, **dadurch gekennzeichnet, dass** die zeitliche Dauer C des zweiten Einbruchs ermittelt wird, wenn dieser auftritt.

3. Verfahren gemäß Anspruch 1, **dadurch gekennzeichnet, dass**
a. die erzeugten Ultraschallpulse weiterhin einen longitudinal polarisierten Anteil aufweisen, und
b. die Änderung der Laufzeitverzögerung des longitudinal polarisierten Anteils der Folge von Ultraschallpulsen während der Erzeugung des zu prüfenden Schweißpunkts (2) zeitlich aufgelöst erfasst wird.

4. Verfahren gemäß Anspruch 1 oder 3, **dadurch gekennzeichnet, dass**
a. die Erzeugung des zu prüfenden Schweißpunkts (2) durch Anlegen eines Schweißstroms zum Zeitpunkt T₀ eingeleitet und durch Abschalten des Schweißstroms zum Zeitpunkt T_{E} beendet wird, und
b. die Erfassung der Änderung der Transmission des transversal polarisierten Anteils der Folge von Ultraschallpulsen und / oder des longitudinal polarisierten Anteils der Folge von Ultraschallpulsen vor dem Zeitpunkt T₀ begonnen und über den Zeitpunkt T_{E} hinaus fortgesetzt wird.

5. Verfahren zur Online-Prüfung eines mittels elektrischem Widerstandsschweißen erzeugten Schweißpunkts (2) zwischen zwei beschichteten Blechen (3) wobei das Material des Blechkerns einen anderen Schmelzpunkt aufweist als das Material der Beschichtung, mittels Ultraschall, mit den folgenden Verfahrensschritten:
a. Erzeugen einer Folge von Ultraschallpulsen, die einen transversal polarisierten Anteil aufweisen,
b. Reflexion der Folge von Ultraschallpulsen am zu prüfenden, mittels elektrischem Widerstandsschweißen erzeugten Schweißpunkt (2) während der Erzeugung des Schweißpunkts,
c. Empfangen der Folge von Ultraschallpulsen nach der Reflexion der Ultraschallpulse am Schweißpunkt (2),
**dadurch gekennzeichnet, dass**
d. die Änderung der Reflexion des transversal polarisierten Anteils der Folge von Ultraschallpulsen während der Erzeugung des zu prüfenden Schweißpunkts (2) zeitlich aufgelöst erfasst wird, wobei weiterhin analysiert wird, ob ein erstes und ein zweites Maximum in der Reflexion auftreten

6. Vorrichtung (1) zur Online-Prüfung eines mittels elektrischem Widerstandsschweißen erzeugten Schweißpunkts (2) zwischen zwei beschichteten Blechen (3), wobei das Material des Blechkerns einen anderen Schmelzpunkt aufweist als das Material der Beschichtung, mit
a. einer ersten Schweißelektrode (10) mit einem ersten Elektrodenschaft (12) und einer auswechselbaren ersten Elektrodenkappe (14),
b. einer zweiten Schweißelektrode (20) mit einem zweiten Elektrodenschaft (22) und einer auswechselbaren zweiten Elektrodenkappe (24),
c. einem Ultraschallsendewandler (30), der dazu eingerichtet ist, eine Folge von Ultraschallpulsen abzugeben, welche einen transversal polarisierten Anteil aufweisen, und einem Ultraschallempfangswandler (40), der dazu vorgesehen ist, die vom Ultraschallsendewandler (30) abgegebene Folge von Ultraschallpulsen zu empfangen, wobei der Ultraschallsendewandler (30) und der Ultraschallempfangswandler (40) so ausgebildet sind, dass ein vom Ultraschallsendewandler (30) abgegebener Ultraschallpuls über die erste Schweißelektrode (10) durch den zwischen den beschichteten Blechen (3) erzeugten Schweißpunkt (2) hindurch über die zweite Schweißelektrode (20) zum Ultraschallempfangswandler (40) gelangen und von diesem empfangen werden kann,
d. einer Auswerteeinheit (50), die mit dem Ultraschallempfangswandler (40) verbunden ist,
**dadurch gekennzeichnet, dass**
die Auswerteeinheit (50) dazu eingerichtet ist, die Änderung der Transmission des transversal polarisierten Anteils der Folge vom Ultraschallsendewandler (30) erzeugter Ultraschallpulse durch den Schweißpunkt (2) während der Erzeugung des Schweißpunkts (2) zeitaufgelöst zu erfassen und dahingehend zu analysieren, ob ein erstes und ein zweites Minimum in der Transmission auftreten.

7. Vorrichtung (1) gemäß Anspruch 6, **dadurch gekennzeichnet, dass** die Elektrodenkappen (14, 24) bezüglich ihrer Ultraschallführungseigenschaften dergestalt ausgebildet sind, dass ein in einer Elektrodenkappe (14, 24) propagierender transversal polarisierter Ultraschallpuls im wesentlichen keine Transformation in einen longitudinal polarisierten Ultraschallpuls erfährt.

8. Vorrichtung (1) gemäß Anspruch 6, **dadurch gekennzeichnet, dass** ein vom Ultraschallsendewandler (30) erzeugter Ultraschallpuls unmittelbar in die erste Elektrodenkappe (14) eingekoppelt wird.

9. Vorrichtung (1) gemäß Anspruch 8, **dadurch gekennzeichnet, dass**
a. die erste Elektrodenkappe (14) eine plane Innenfläche (16) aufweist, und
b. der Ultraschallsendewandler (30) zur Einkopplung des erzeugten Ultraschallpulses in die erste Elektrodenkappe (14) unmittelbar an der planen Innenfläche (16) angeordnet ist.

10. Vorrichtung (1) gemäß Anspruch 9, **dadurch gekennzeichnet, dass**
a. die erste Schweißelektroden (10) einen Kühlmitteldurchströmten Hohlraum (18, 28) ausbildet, und
b. der Ultraschallsendewandler (30) dergestalt in diesem Hohlraum (18) angeordnet ist, dass er von Kühlmittel umströmt wird.

11. Vorrichtung gemäß Anspruch 6, **dadurch gekennzeichnet, dass**
a. das die Folge der vom Ultraschallsendewandler (30) erzeugten Ultraschallpulse jeweils einen transversal polarisierten Anteil S_{T} und einen longitudinal polarisierten Anteil S_{L} aufweisen, und
b. die Auswerteeinheit (50) dazu eingerichtet ist, die Transmission des transversal polarisierten Anteils S_{T} und die Laufzeitverzögerung des longitudinal polarisierten Anteils S_{L} der Folge von Ultraschallpulsen getrennt voneinander zeitaufgelöst zu erfassen.

12. Vorrichtung (1) gemäß Anspruch 8, **dadurch gekennzeichnet, dass** ein durch den erzeugten Schweißpunkt (3) hindurch getretener Ultraschallpuls unmittelbar aus zweiten Elektrodenkappe (24) ausgekoppelt wird, die der ersten Elektrodenkappe (14) gegenüberliegt, in die der vom Ultraschallsendewandler (30) erzeugte Ultraschallpuls eingekoppelt wurde.

13. Vorrichtung (1) zur Online-Prüfung eines mittels elektrischem Widerstandsschweißen erzeugten Schweißpunkts (2) zwischen zwei beschichteten Blechen (3), wobei das Material des Blechkerns einen anderen Schmelzpunkt aufweist als das Material der Beschichtung, mit
a. einer ersten Schweißelektrode (10) mit einem ersten Elektrodenschaft (12) und einer auswechselbaren ersten Elektrodenkappe (14),
b. einer zweiten Schweißelektrode (20),
c. einem Ultraschallsendewandler (30), der dazu eingerichtet ist, eine Folge von Ultraschallpulsen abzugeben, welche einen transversal polarisierten Anteil aufweisen, und einem Ultraschallempfangswandler (40), der dazu vorgesehen ist, die vom Ultraschallsendewandler (30) abgegebene Folge von Ultraschallpulsen zu empfangen, wobei der Ultraschallsendewandler (30) und der Ultraschallempfangswandler (40) so ausgebildet sind, dass ein vom Ultraschallsendewandler (30) abgegebener Ultraschallpuls über die erste Schweißelektrode (10) zu dem zwischen den beschichteten Blechen (3) erzeugten Schweißpunkt (2) gelangen und zumindest teilweise an diesem reflektiert werden kann, und nachfolgend über die erste Schweißelektrode (10) zum Ultraschallempfangswandler (40) gelangen und von diesem empfangen werden kann,
d. einer Auswerteeinheit (50), die mit dem Ultraschallsendewandler (30) und dem Ultraschallempfangswandler (40) verbunden ist,
**dadurch gekennzeichnet, dass**
die Auswerteeinheit (50) dazu eingerichtet ist, die Änderung der Reflexion des transversal polarisierten Anteils der Folge der vom Ultraschallsendewandler (30) erzeugten Ultraschallpulse am Schweißpunkt (2) während der Erzeugung des Schweißpunkts (2) zeitaufgelöst zu erfassen und dahingehend zu analysieren, ob ein erstes und ein zweites Maximum in der Reflexion auftreten.

## Claims

1. Method for the ultrasound online testing of a welding spot (2) produced by means of electrical resistance welding between two coated metal sheets (3), wherein the material of the metal sheet core has a different melting point than the material of the coating, comprising the following method steps:
a. generating a sequence of ultrasonic pulses having a transversally polarised component,
b. transsonifying the welding spot (2), which Is to be tested and is produced by means of electrical resistance welding, with the sequence of ultrasonic pulses during the production of the welding spot (2),
c. receiving the sequence of ultrasonic pulses after the ultrasonic pulses have passed through the welding spot (2),
**characterised in that**
d. the change of the transmission of the transversally polarised component of the sequence of ultrasonic pulses is detected in a time-resolved manner during the production of the welding spot (2) to be tested, wherein it is further analysed whether a first and a second minimum occur in the transmission.

2. Method according to claim 1, **characterised In that** the duration C of the second drop is determined when it occurs.

3. Method according to claim 1, **characterised In that**
a. the generated ultrasonic pulses further have a longitudinally polarised component, and
b. the change of the propagation delay of the longitudinally polarised component of the sequence of ultrasonic pulses is detected in a time-resolved manner during the production of the welding spot (2) to be tested.

4. Method according to claim 1 or 3, **characterised in that**
a. the production of the welding spot (2) to be tested Is Initiated by applying a welding current at the time To and terminated by switching off the welding current at the time T_{E}, and
b. the detection of the change of the transmission of the transversally polarised component of the sequence of ultrasonic pulses and/or of the longitudinally polarised component of the sequence of ultrasonic pulses is started prior to the time To and continued beyond the time T_{E}.

5. Method for the online testing, by means of ultrasound, of a welding spot (2) produced by means of electrical resistance welding between two coated metal sheets (3), wherein the material of the metal sheet core has a different melting point than the material of the coating, comprising the following method steps:
a. generating a sequence of ultrasonic pulses having a transversally polarised component,
b. reflection of the sequence of ultrasonic pulses on the welding spot (2), which Is to be tested and is produced by means of electrical resistance welding, during the production of the welding spot,
c. receiving the sequence of ultrasonic pulses after the reflection of the ultrasonic pulses on the welding spot (2),
**characterised in that**
d. the change of the reflection of the transversally polarised component of the sequence of ultrasonic pulses is detected in a time-resolved manner during the production of the welding spot (2) to be tested, wherein it is further analysed whether a first and a second maximum occur in the reflection.

6. Apparatus (1) for the online testing of a welding spot (2) produced by means of electrical resistance welding between two coated metal sheets (3), wherein the material of the metal sheet core has a different melting point than the material of the coating, comprising
a. a first weld electrode (10) having a first electrode shaft (12) and a replaceable first electrode cap (14),
b. a second weld electrode (20) having a second electrode shaft (22) and a replaceable second electrode cap (24),
c. an ultrasonic transmitting transducer (30) configured to emit a sequence of ultrasonic pulses that have a transversally polarised component, and an ultrasonic receiving transducer (40) provided for receiving the sequence of ultrasonic pulses emitted by the ultrasonic transmitting transducer (30), wherein the ultrasonic transmitting transducer (30) and the ultrasonic receiving transducer (40) are configured in such a way that an ultrasonic pulse emitted by the ultrasonic transmitting transducer (30) is able to pass via the first weld electrode (10) through the weld point (2) produced between the coated metal sheets (3) via the second weld electrode (20) to the ultrasonic receiving transducer (40) and be received by it,
d. an evaluation unit (50) connected to the ultrasonic receiving transducer (40),
**characterised In that**
the evaluation unit (50) is configured to detect in a time-resolved manner the change of the transmission through the weld spot (2) of the transversally polarised component of the sequence of ultrasonic pulses generated by the ultrasonic transmitting transducer (30) during the production of the welding spot (2), and to analyse it as to whether a first and a second minimum occur in the transmission.

7. Apparatus (1) according to claim 6, **characterised in that** the electrode cap (14, 24), with respect to its ultrasound conducting properties, is configured in such a way that a transversally polarised ultrasonic pulse propagating in an electrode cap (14, 24) is subjected to substantially no transformation into a longitudinally polarised ultrasonic pulse.

8. Apparatus (1) according to claim 6, **characterised in that** an ultrasonic pulse generated by the ultrasonic transmitting transducer (30) is directly coupled into the first electrode cap (14).

9. Apparatus (1) according to claim 8, **characterised in that**
a. the first electrode cap (14) has a planar inner surface (16), and
b. the ultrasonic transmitting transducer (30) Is disposed directly on the planar inner surface (16) for coupling the generated ultrasonic pulse into the first electrode cap (14).

10. Apparatus (1) according to claim 9, **characterised in that**
a. the first weld electrode (10) forms a cavity (18, 28) through which cooling agent flows,
b. the ultrasonic transmitting transducer (30) is disposed in this cavity (18) in such a way that cooling agent flows around It.

11. Apparatus according to claim 6, **characterised in that**
a. the sequence of ultrasonic pulses generated by the ultrasonic transmitting transducer (30) each have a transversally polarised component S_{T} and a longitudinally polarised component S_{L}, and
b. the evaluation unit (50) is configured to detect in a time-resolved manner the transmission of the transversally polarised component S_{T} and the propagation delay of the longitudinally polarised component S_{L} of the sequence of ultrasonic pulses separately from one another.

12. Apparatus (1) according to claim 8, **characterised in that** an ultrasonic pulse that has passed through the produced welding spot (3) Is directly coupled out from the second electrode cap (24) which is opposite from the first electrode cap (14) into which the ultrasonic pulse generated by the ultrasonic transmitting transducer (30) was coupled.

13. Apparatus (1) for the online testing of a welding spot (2) produced by means of electrical resistance welding between two coated metal sheets (3), wherein the material of the metal sheet core has a different melting point than the material of the coating, comprising
a. a first weld electrode (10) having a first electrode shaft (12) and a replaceable first electrode cap (14),
b. a second weld electrode (20),
c. an ultrasonic transmitting transducer (30) configured to emit a sequence of ultrasonic pulses that have a transversally polarised component, and an ultrasonic receiving transducer (40) provided for receiving the sequence of ultrasonic pulses emitted by the ultrasonic transmitting transducer (30), wherein the ultrasonic transmitting transducer (30) and the ultrasonic receiving transducer (40) are configured in such a way that an ultrasonic pulse emitted by the ultrasonic transmitting transducer (30) is able to pass via the first weld electrode (10) to the weld point (2) produced between the coated metal sheets (3) and can be reflected thereon at least partially, and can subsequently pass via the first weld electrode (10) to the ultrasonic receiving transducer (40) and be received by it,
d. an evaluation unit (50) connected to the ultrasonic transmitting transducer (30) and the ultrasonic receiving transducer (40),
**characterised in that**
the evaluation unit (50) is configured to detect in a time-resolved manner the change of the reflection on the weld spot (2) of the transversally polarised component of the sequence of ultrasonic pulses generated by the ultrasonic transmitting transducer (30) during the production of the welding spot (2), and to analyse It as to whether a first and a second maximum occur in the reflection.

## Revendications

1. Procédé de contrôle en ligne par ultrasons d'un point de soudure (2) réalisé au moyen du soudage par résistance électrique, entre deux tôles (3) revêtues, le matériau de l'âme de la tôle présentant un point de fusion différent de celui du matériau du revêtement, comprenant les étapes de procédé suivantes consistant à :
a. générer une suite d'impulsions ultrasonores qui présentent une part polarisée transversalement,
b. émettre, à travers ledit point de soudure (2) à contrôler réalisé au moyen du soudage par résistance électrique, ladite suite d'impulsions ultrasonores durant la réalisation du point de soudure (2),
c. recevoir ladite suite d'impulsions ultrasonores après que les impulsions ultrasonores ont traversé le point de soudure (2),
**caractérisé par le fait que**
d. la modification de la transmission de la part polarisée transversalement de la suite d'impulsions ultrasonores est détectée à résolution temporelle, durant la réalisation du point de soudure (2) à contrôler, étant analysé en outre si des premier et deuxième minimums apparaissent dans la transmission.

2. Procédé selon la revendication 1, **caractérisé par le fait que** l'on détermine la durée C de la deuxième chute si celle-ci apparaît.

3. Procédé selon la revendication 1, **caractérisé par le fait que**
a. les impulsions ultrasonores générées présentent en outre une part polarisée longitudinalement et que
b. la modification du retard de temps de propagation de ladite part polarisée longitudinalement de la suite d'impulsions ultrasonores est détectée à résolution temporelle, durant la réalisation du point de soudure (2) à contrôler.

4. Procédé selon la revendication 1 ou 3, **caractérisé par le fait que**
a. la réalisation du point de soudure (2) à contrôler est commencée en appliquant un courant de soudage au moment T₀ et est terminée en arrêtant le courant de soudage au moment T_{E}, et que
b. la détection de la modification de la transmission de la part polarisée transversalement de la suite d'impulsions ultrasonores et/ou de la part polarisée longitudinalement de la suite d'impulsions ultrasonores est commencée avant le moment T₀ et est poursuivie au-delà du moment T_{E}.

5. Procédé de contrôle en ligne par ultrasons d'un point de soudure (2) réalisé au moyen du soudage par résistance électrique, entre deux tôles (3) revêtues, le matériau de l'âme de la tôle présentant un point de fusion différent de celui du matériau du revêtement, comprenant les étapes de procédé suivantes consistant à :
a. générer une suite d'impulsions ultrasonores qui présentent une part polarisée transversalement,
b. réfléchir, sur ledit point de soudure (2) à contrôler réalisé au moyen du soudage par résistance électrique, ladite suite d'impulsions ultrasonores durant la réalisation du point de soudure,
c. recevoir ladite suite d'impulsions ultrasonores après que les impulsions ultrasonores ont été réfléchies sur ledit point de soudure (2),
**caractérisé par le fait que**
d. la modification de la réflexion de la part polarisée transversalement de la suite d'impulsions ultrasonores est détectée à résolution temporelle, durant la réalisation du point de soudure (2) à contrôler, étant analysé en outre si des premier et deuxième maximums apparaissent dans la réflexion.

6. Dispositif (1) de contrôle en ligne d'un point de soudure (2) réalisé au moyen du soudage par résistance électrique, entre deux tôles (3) revêtues, le matériau de l'âme de la tôle présentant un point de fusion différent de celui du matériau du revêtement, comprenant
a. une première électrode de soudure (10) ayant une première tige d'électrode (12) et un premier capuchon d'électrode (14) échangeable,
b. une deuxième électrode de soudure (20) ayant une deuxième tige d'électrode (22) et un deuxième capuchon d'électrode (24) échangeable,
c. un transducteur ultrasonore émetteur (30) qui est adapté à émettre une suite d'impulsions ultrasonores qui présentent une part polarisée transversalement, ainsi qu'un transducteur ultrasonore récepteur (40) qui est prévu pour recevoir ladite suite d'impulsions ultrasonores émise par le transducteur ultrasonore émetteur (30), ledit transducteur ultrasonore émetteur (30) et ledit transducteur ultrasonore récepteur (40) étant conçus de manière à ce qu'une impulsion ultrasonore émise par ledit transducteur ultrasonore émetteur (30) puisse atteindre ledit transducteur ultrasonore récepteur (40) en passant via ladite première électrode de soudure (10), à travers le point de soudure (2) réalisé entre les tôles (3) revêtues, via ladite deuxième électrode de soudure (20), et puisse être reçue par celui-ci,
d. une unité d'évaluation (50) qui est reliée audit transducteur ultrasonore récepteur (40),
**caractérisé par le fait que**
ladite unité d'évaluation (50) est adaptée à détecter à résolution temporelle la modification de la transmission de la part polarisée transversalement de la suite d'impulsions ultrasonores générées par ledit transducteur ultrasonore émetteur (30), à travers le point de soudure (2), durant la réalisation du point de soudure (2), et à analyser celle-ci pour savoir si des premier et deuxième minimums apparaissent dans la transmission.

7. Dispositif (1) selon la revendication 6, **caractérisé par le fait que** lesdits capuchons d'électrode (14, 24) sont réalisés, quant à leurs propriétés de guidage d'ultrasons, de telle sorte qu'une impulsion ultrasonore polarisée transversalement se propageant à l'intérieur d'un capuchon d'électrode (14, 24) ne subit pour l'essentiel pas de transformation en une impulsion ultrasonore polarisée longitudinalement.

8. Dispositif (1) selon la revendication 6, **caractérisé par le fait qu'**une impulsion ultrasonore générée par ledit transducteur ultrasonore émetteur (30) est couplée immédiatement dans ledit premier capuchon d'électrode (14).

9. Dispositif (1) selon la revendication 8, **caractérisé par le fait que**
a. ledit premier capuchon d'électrode (14) présente une surface intérieure (16) plane et
b. ledit transducteur ultrasonore émetteur (30), pour coupler l'impulsion ultrasonore générée dans ledit premier capuchon d'électrode (14), est disposé directement sur ladite surface intérieure (16) plane.

10. Dispositif (1) selon la revendication 9, **caractérisé par le fait que**
a. ladite première électrode de soudure (10) forme une cavité (18, 28) traversée par un agent de refroidissement et que
b. ledit transducteur ultrasonore émetteur (30) est agencé dans cette cavité (18) de manière à ce que de l'agent de refroidissement s'écoule autour de celui-ci.

11. Dispositif selon la revendication 6, **caractérisé par le fait que**
a. la suite des impulsions ultrasonores générées par ledit transducteur ultrasonore émetteur (30) présentent chacune une part polarisée transversalement S_{T} et une part polarisée longitudinalement S_{L}, et que
b. ladite unité d'évaluation (50) est adaptée à détecter à résolution temporelle, séparément l'une de l'autre, la transmission de ladite part polarisée transversalement S_{T} et le retard de temps de propagation de la part polarisée longitudinalement S_{L} de la suite d'impulsions ultrasonores.

12. Dispositif (1) selon la revendication 8, **caractérisé par le fait qu'**une impulsion ultrasonore ayant traversé ledit point de soudure (2) produit est découplée immédiatement dudit deuxième capuchon d'électrode (24) qui est situé en vis-à-vis du premier capuchon d'électrode (14) dans lequel a été couplée l'impulsion ultrasonore générée par ledit transducteur ultrasonore émetteur (30).

13. Dispositif (1) de contrôle en ligne d'un point de soudure (2) réalisé au moyen du soudage par résistance électrique, entre deux tôles (3) revêtues, le matériau de l'âme de la tôle présentant un point de fusion différent de celui du matériau du revêtement, comprenant
a. une première électrode de soudure (10) ayant une première tige d'électrode (12) et un premier capuchon d'électrode (14) échangeable,
b. une deuxième électrode de soudure (20),
c. un transducteur ultrasonore émetteur (30) qui est adapté à émettre une suite d'impulsions ultrasonores qui présentent une part polarisée transversalement, ainsi qu'un transducteur ultrasonore récepteur (40) qui est prévu pour recevoir ladite suite d'impulsions ultrasonores émise par le transducteur ultrasonore émetteur (30), ledit transducteur ultrasonore émetteur (30) et ledit transducteur ultrasonore récepteur (40) étant conçus de manière à ce qu'une impulsion ultrasonore émise par ledit transducteur ultrasonore. émetteur (30) puisse atteindre le point de soudure (2) réalisé entre les tôles (3) revêtues en passant via ladite première électrode de soudure (10), et puisse être réfléchie au moins en partie sur celui-ci, et puisse, ensuite, atteindre ledit transducteur ultrasonore récepteur (40) en passant via ladite deuxième électrode de soudure (20), et puisse être reçue par celui-ci,
d. une unité d'évaluation (50) qui est reliée audit transducteur ultrasonore émetteur (30) et audit transducteur ultrasonore récepteur (40),
**caractérisé par le fait que**
ladite unité d'évaluation (50) est adaptée à détecter à résolution temporelle la modification de la réflexion de la part polarisée transversalement de la suite des Impulsions ultrasonores générées par ledit transducteur ultrasonore émetteur (30), sur le point de soudure (2) durant la réalisation du point de soudure (2), et à analyser celle-ci pour savoir si des premier et deuxième maximums apparaissent dans la réflexion.
